(19)

**Europäisches Patentamt**
**European Patent Office**
**Office européen des brevets**

(11) **EP 4 574 773 A1**

(12) **EUROPEAN PATENT APPLICATION**

(43) Date of publication:
**25.06.2025 Bulletin 2025/26**

(21) Application number: **23307273.5**

(22) Date of filing: **19.12.2023**

(51) International Patent Classification (IPC):
*C02F 1/467* (2023.01)        *C02F 3/02* (2023.01)
*C02F 3/28* (2023.01)        *C02F 1/461* (2023.01)
*C02F 101/12* (2006.01)      *C02F 101/16* (2006.01)
*C02F 101/30* (2006.01)      *C02F 103/00* (2006.01)
*C02F 103/06* (2006.01)      *C02F 103/30* (2006.01)
*C02F 103/34* (2006.01)

(52) Cooperative Patent Classification (CPC):
**C02F 1/4672; C02F 3/02; C02F 3/28;**
C02F 2001/46147; C02F 2001/46157;
C02F 2101/12; C02F 2101/16; C02F 2101/30;
C02F 2103/001; C02F 2103/06; C02F 2103/30;
C02F 2103/343; C02F 2209/08; C02F 2209/20;
C02F 2209/40;                          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Université Gustave Eiffel
77420 Champs-Sur-Marne (FR)**

(72) Inventors:
• **GIBERT-VILAS, Màxim
11100 Narbonne (FR)**

• **TRELLU, Clément
94360 Bry-sur-Marne (FR)**
• **PECHAUD, Yoan
92140 Clamart (FR)**
• **OTURAN, Mehmet
94350 Villiers sur Marne (FR)**
• **OTURAN, Nihal
94350 Villiers sur Marne (FR)**

(74) Representative: **A.P.I. Conseil
Immeuble Newton
4, rue Jules Ferry
64000 Pau (FR)**

(54) **DEVICE AND METHOD FOR TREATING CONCENTRATED AQUEOUS EFFLUENTS**

(57)    The present invention relates to the field of treatment of waste, more specifically treatment of effluent highly concentrated in organic compounds. More particularly the invention relates to a system for a continuous treatment of a concentrated effluent comprising non-biodegradable initial organic compounds, and with a chemical oxygen demand of between 0.2 kg. m$^{-3}$ and 50 kg. m$^{-3}$, comprising, arranged fluidically in series : at least one anodic oxidation reactor comprising a set of a plurality of cathodes and of boron doped diamond anodes, said cathodes and anodes being grids with meshes and being successively arranged in alternation in said reactor ; at least one biological treatment reactor, which is located downstream of the at least one anodic oxidation reactor, configured to degrade continuously into inorganic products the biodegradable byproducts contained in the output of the upstream at least one anodic oxidation reactor flow.

Figure 1

**(Cont. next page)**

(52) Cooperative Patent Classification (CPC): (Cont.)
     C02F 2301/046

**Description**

**FIELD OF THE INVENTION**

The present invention relates to the field of treatment of wastewater, more specifically treatment of effluent highly concentrated in organic, nitrogen and/or chlorinated compounds. More particularly, the invention provides a system and a process allowing the coupling of electrochemical degradation and biodegradation with an improved efficiency.

**BACKGROUND OF THE INVENTION**

Many industrial effluents have very specific compositions. In particular, some have high concentrations of non-biodegradable organic molecules. The treatment of this type of effluent requires the use of advanced and costly treatment processes (e.g. the use of membrane processes such as nanofiltration and reverse osmosis). Conventional biological processes used on a unitary basis are less costly, but do not achieve sufficient removal of the organic load.

There is some use of expensive processes that are not very efficient for these applications in concentrated industrial water treatment (nanofiltration, reverse osmosis, evaporation). For example, these membrane processes are generally better suited to the tertiary treatment of effluents to comply with very strict water quality standards (e.g. drinking water). In the case of concentrated effluent, the problems of clogging and membrane lifetime are tenfold. The management of concentrates also represents a major issue.

At present, according to environmental regulations in some countries, some treatment waste (landfill leachate concentrates, i.e. pollutants that are separated from the leachate but not eliminated/degraded) must be disposed of as (expensive) final waste.

Various electrochemical processes have been developed for this type of application to effluents containing non-biodegradable organic pollutants. Initially, certain configurations are suitable for eliminating low to moderate concentrations of organic pollutants, in the absence of potentially clogging particulate matter (porous electrodes with a flow-through configuration). These configurations were considered not suitable for treating concentrated industrial effluents, not suitable for combination with biological treatment, as reaching the complete mineralization of the compounds of the effluent, rendering further biological treatment almost useless.

The energy cost of electrochemical processes as standalone process for the treatment of concentrated effluent makes these processes less desirable in terms of cost and in a context of policy of energy restraint.

Numerous scientific studies have reported promising results for coupling the electro-Fenton process with biological treatment. However, the electro-Fenton process currently has two major drawbacks, including (i) the need to work at an acid pH (around 3) and (ii) the need for aeration, which can lead to foaming problems in reactors for treating concentrated effluents.

Another electrochemical process is the anodic oxidation process. However, this process often promotes complete conversion of organic compounds to end by-products such as $CO_2$ (i.e. mineral / inorganic by-product), therefore consuming energy to this end, and rendering subsequent biological treatment useless.

There is still a need for a cost-effective and energy efficient solution in treating highly concentrated effluents.

**SUMMARY OF THE INVENTION**

Inventors have discovered it is possible to improve degradation kinetics of compounds and production of intermediated degradation by-products in Anodic Oxydation process, without influencing kinetics of downstream mineralization reactions by modulating electrodes geometry. This allows increasing the by-product concentration available for a subsequent biological degradation. Further, surprisingly, such conditions are found to produce less undesirable by-products (chlorates, perchlorates) that are detrimental for subsequent biodegradation processes and subjected to statutory restrictions. Inventors have developed a particular anodic reactor that fulfils these conditions.

According to a first object, the present invention relates to a system for a continuous treatment of a polluted concentrated effluent such as: a landfill leachate, an effluent from the pharmaceutical, cosmetic or textile industry, a soil washing effluent, a concentrate from a membrane process, comprising non-biodegradable initial organic compounds with a chemical oxygen demand (COD) of between 0.2 kg. m$^{-3}$ and 50 kg. m$^{-3}$, advantageously a chemical oxygen demand (COD) of between 0.2 kg. m$^{-3}$ and 20 kg. m$^3$,
said system comprising, arranged fluidically in series:

- at least one anodic oxidation reactor comprising a set of a plurality of cathodes and of boron doped diamond anodes, said cathodes and anodes being grids with meshes and being successively arranged in alternation in said reactor so as :

- a continuous flow of polluted effluent pass through the openings of meshes of anodes and cathodes grid,

- to realize, in operation, a continuous degradation of the initial non-biodegradable molecules contained in the concentrated effluent:

  • partially into inorganic products,
  • partially into biodegradable by-products,
  • partially into non-biodegradable by-products,

and

- at least one biological treatment reactor, which is located downstream of the at least one anodic oxidation reactor with respect to the direction of flow of the concentrated effluent, and which is configured to degrade continuously into inorganic products the biodegradable by-products contained in the output of the upstream at least one anodic oxidation reactor flow.

As exemplified, the special configuration of the anodic oxidation reactor as set by the inventors makes it particularly suitable for pre-treating concentrated effluents in view of their biological treatment, thereby providing an efficient and cost-effective system for the mineralisation of concentrated effluents.

According to other optional features of the system according to the invention, it can optionally include one or more of the following characteristics alone or in combination:

- wherein at least one of the following features : the number of the electrode grids, the total active surface of the electrode grids, the number of the openings of the meshes, the size of the openings of the meshes, the ratio of the surface of the openings of the meshes of the anode grids to the total geometric surface of the anode grid, the velocity of the flow through the openings of the meshes in the anodic oxidation reactor, is chosen in order to reach a suitable mass transport coefficient $k_m$ and so that:

  the mineralization kinetic, which is measured by the evolution of the Total Organic Carbon (TOC) is substantially the same compared to mineralization kinetic observed in a control anodic oxidation reactor, identical to the anodic oxidation reactor, except that anodes and cathodes are plates of the same geometric total surface area than the total solid surface of meshes of the grid, said plates being made of the same materials than the electrode grids, and wherein a same flow rate of the effluent is applied in the plate anodic oxidation reactor,
  the degradation kinetics of the initial non-biodegradable molecules, which is measured by the evolution of a value correlated to the concentration of non-biodegradable organic compounds, is faster compared to the plate anodic oxidation reactor, allowing to create an accumulation of a greater concentration of biodegradable by-products, and
  a reduction, compared to the plate anodic oxidation reactor, in the formation of undesirable by-products of chloride ion oxidation, such as chlorate or perchlorate, is measured;

- the at least one feature is configured to achieve a first order degradation of the initial non-biodegradable molecules rate constant 1.5 fold higher than the first order degradation rate constant using the control anodic oxidation reactor;

- a ratio between the maximal value of the biological oxygen demand at maximal time (ultimate BOD) and the chemical oxygen demand (COD) of the effluent at the output of the upstream anodic oxidation reactor is of at least 0.25, advantageously of at least 0.4;

- the mass transport coefficient ($k_m$), determined for phenol as control compound and using an inert electrolyte (NaNOs), is at least of 5 $\mu$m.s$^{-1}$;

- the flow rate and the design of said boron-doped diamond anode are chosen so as to optimize the mass transport coefficient of phenol ($k_m$) to the anode surface, which is quantified numerically from experimental data with low initial concentration of phenol, such as the removal of COD is limited by mass transport phenomena, as model pollutant by determining the value of km from calibration of the following model with experimental data of COD (chemical oxygen demand) removal in the considered reactor, according to the equation :

$$\frac{\partial C}{\partial t} = D\,\frac{\partial^2 C}{\partial x^2} - \overline{u}\,\frac{\partial C}{\partial x} - k_m\,a\,C$$

where C is the COD concentration ($gO_2\,m^{-3}$), $D$ is the dispersion coefficient ($m^2\,s^{-1}$), $\overline{u}$ is the mean flow velocity ($m.s^{-1}$), ($k_m$) is the mass transport coefficient ($m.s^{-1}$), $k_m$, a is the total active surface of electrodes (A) by reactor volume (V) (a = A/V) ($m^2.m^{-3}$), F is the Faraday constant (96485 $C.mol^{-1}$) and / is the current intensity (A);

- the anodes of the at least one anodic oxidation reactor, which are grids, meshes are openings with a length of between 3 mm and 12 mm and a nominal short length of between 2 mm and 8 mm;

- the anodes have a ratio of the openings surface compared to the total geometric surface of the anode between 5 % and 60 %, preferably between 10 % and 40 %;

- a means adapted to measure chemical oxygen demand (COD) and/or the (BOD) and/or the total organic carbon (TOC);

- a means adapted to measure fluorescence levels of the effluent at the output of the at least one anodic oxidation reactor;

- the means adapted to measure the COD, the BOD and/or the TOC and/or fluorescence comprises a spectro fluorophotometer;

- at least one recirculation circuit allows the effluent at the output of any of the at least one anodic oxidation reactor to recirculate through at least one anodic oxidation reactor to degrade the remaining non-biodegradable initial organic compounds and the non-biodegradable by-products into: another different non-biodegradable by-products, inorganic products, and biodegradable by-products at each recirculation, until a desired level of non-biodegradable initial organic compound which remains after N steps of recirculation is inferior to a predetermined threshold value, N being a natural number.;

- the threshold value as mentioned above is defined so that in the concentrated effluent the concentration of remaining non-biodegradable initial organic compounds after the N steps of recirculation is inferior to 20% of the initial concentration of the non-biodegradable initial organic compounds, advantageously inferior to 10% of the initial concentration of the non-biodegradable initial organic compounds;

- the at least one biological treatment reactor is configured to convert

  - continuously inorganic nitrogen compounds in by-products such as $N_2$, and/or
  - chlorinated inorganic compounds in by-products such as chloride ions;

- at least one biological treatment reactor is configured to realize : aerobic processes based on fixed and / or free biomass, anaerobic processes based on fixed and / or free biomass, each of these biological treatment being possibly coupled with a biomass separation step based on a settling process or a membrane process.

According to a second object, the present invention relates to the use of at least one anodic oxidation reactor comprising a set of a plurality cathodes and of boron doped diamond anodes, said cathodes and anodes being grids with meshes and being successively arranged in alternation in said reactor so as a continuous flow of effluent passes through the openings of meshes of anodes and cathodes grids, to realize, in operation, the degradation of non-biodegradable molecules contained in the concentrated effluent:

- partially into inorganic products,
- partially into biodegradable by-products.

As shown in the experimental section said use allows a gentle electrochemical degradation of the degradation of non-biodegradable while lowering the production of toxic by-products.

According to a third object, the present invention relates to a process for treating in a continuous flow at least one concentrated effluent of a chemical oxygen demand of between 0.2 kg. $m^{-3}$ and 50.0 kg. $m^{-3}$, advantageously a chemical oxygen demand (COD) of between 0.2 kg. $m^{-3}$ and 20 kg. $m^{-3}$, comprising the implementation of a system according to any one of the preceding claims, said process comprising :

- at least one step of treating the effluent by anodic oxidation said at least one effluent, and
- at least one step of treating the product of the anodic oxidation treatment, by a biological treatment.

This process allows a cost effective and energy sober efficient treatment of concentrated effluents.
According to other optional features of the process according to the invention, it can optionally include one or more of the following characteristics alone or in combination:

- the velocity of the polluted effluent through the openings of the meshes of grid electrodes in the at least one anodic oxidation reactor is comprised between 2 and 150 $m.h^{-1}$, advantageously between 15 and 100 $m.h^{-1}$;
- It comprises a step of measuring the chemical oxygen demand (COD) and/or the ratio between ultimate BOD and COD and/or the total organic carbon (TOC) and/or fluorescence levels of the effluent after the at least one step of treating the effluent by anodic oxidation, in order to evaluate the biodegradability of the effluent at the output of the anodic oxidation reactor

wherein when COD and/or BOD and/or TOC and/or fluorescence level of the effluent does not reach a reference value, then step of treating the effluent by anodic oxidation is repeated until said reference value is reached.

## FIGURES

The foregoing and other objects, features and advantages of the present invention will become more apparent from the following detailed description when taken in conjunction with the accompanying drawings in which :

**Figure 1** : Scheme of a system according to an embodiment of the invention.

**Figure 2** : Schematic view of an anodic oxidation flow reactor (front and upper view) according to the invention comprising grid electrodes, and of a grid anode to be used in said flow reactor. Arrows in the mid panel (upper view) represent the effluent flow through the reactor.

**Figure 3** : Schematic view of a control anodic oxidation flow reactor (front and upper view) comprising plate electrodes, and of a plate electrode. Arrows in the mid panel (upper view) represent the effluent flow through the reactor.

**Figure 4** : Main dimensions characterizing of grid electrodes used in an embodiment of the invention.

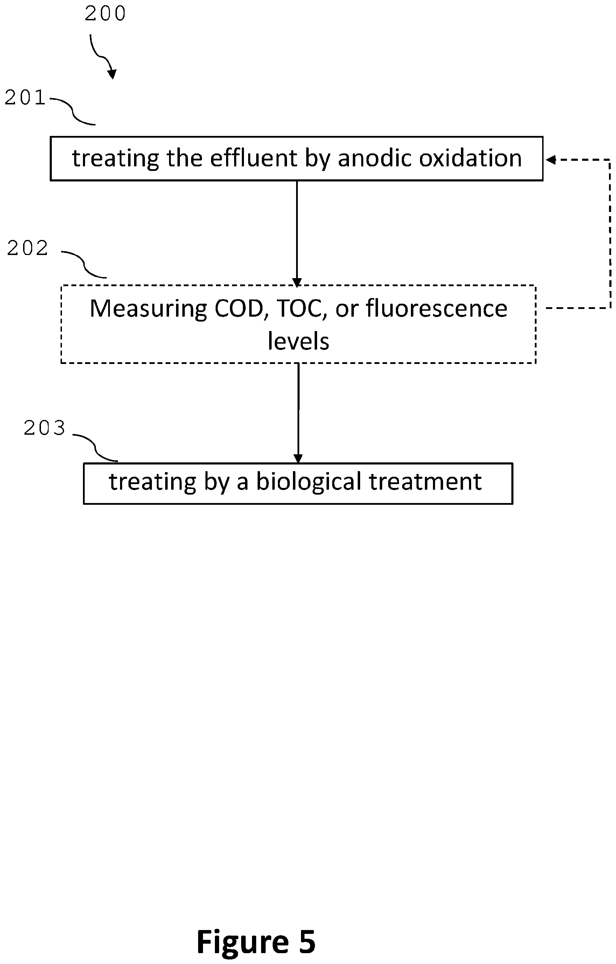

**Figure 5** : Scheme of a process for treating (100) in a continuous flow at least one effluent highly concentrated in organic compounds.

**Figure 6** : Residence time distribution (RTD) curves modelling (solid lines) for configurations with **(A)** plate electrode (dotted line) and **(B)** mesh electrode (dotted line).

**Figure 7** : (A) mass transport coefficient ($k_m$) as a function of liquid flow rate ($Q_l$), and **(B)** log/log plot of Sherwood number ($Sh$) versus Reynolds number ($Re$) for the configuration with plate electrodes (circles) and grid electrodes (squares).

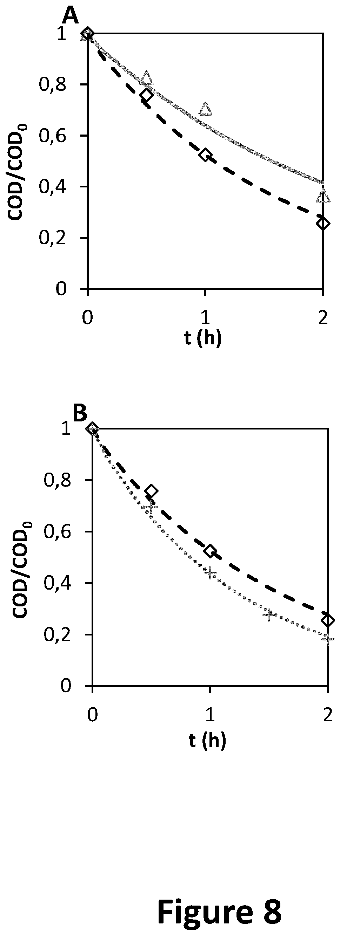

**Figure 8** : Evolution of normalized chemical oxygen demand (COD) ($COD/COD_0$) versus time (h) at $V_T$ = 2.15 L, $Q_l$ = 10.8 L $h^{-1}$, $[phenol]_0$ = 21 mg $L^{-1}$ and $I$ = 4A for **(A)** plate electrode configuration with NaNOs electrolyte (triangle), mesh electrode configuration with NaNOs electrolyte (square) and the corresponding curves obtained from the model for plate electrodes (solid line) and mesh electrodes (dashed line), and **(b)** Evolution of $COD/COD_0$ versus time (h) at $V_T$ = 2.15 L, $[phenol]_0$ = 21 mg $L^{-1}$ and $I$ = 4 A for mesh electrode configuration with NaNOs electrolyte at $Q_l$ = 10.8 L $h^{-1}$ and $[COD]_0$ = 50 $mgO_2$ $L^{-1}$ (square) and $Q_l$ = 32.4 L $h^{-1}$ and $[COD]_0$ = 57 $mgO_2$ $L^{-1}$ (crosses) and the corresponding models for $Q_l$ = 10.8 L $h^{-1}$ (dashed line) and $Q_l$ = 32.4 L $h^{-1}$ (dotted line).

**Figure 9** : (A) evolution of normalized dissolved total organic carbon ($TOC/TOC_0$) and **(B)** phenol degradation evolution through electrolysis time with $Q_l$ = 10.8 L $h^{-1}$, I = 4 A, $V_T$ = 9 L, $[phenol]_0$ = 325 +/- 5 mg $L^{-1}$ and $Na_2SO_4$ electrolyte (50 mM) using plate electrode configuration (circles), mesh electrode configuration (squares).

**Figure 10** : Carbonated by-products monitoring through electrolysis time **(A)** aromatic by-products **(B)** carboxylic acids by-products and **(C)** all carbonated by-products using either a plate electrode configuration (circles) and a grid electrode configured and dimensioned according to the invention (squares). $Q_l = 10.8 \, L \, h^{-1}$, $I = 4 \, A$ and $[phenol]_0 = 325 +/- 5 \, mg \, L^{-1}$ and $Na_2SO_4$ electrolyte (50 mM).

**Figure 11** : Distribution of the carbon concentration between carbon from the initial phenol molecule, carbon from aromatic by-products that were analyzed, carbon from carboxylic acids that were analyzed, and carbon from other by-products at $Q_l = 10.8 \, L \, h^{-1}$, $I = 4 \, A$ and $[phenol]_0 = 325 +/- 5 \, mg \, L^{-1}$ and $Na_2SO_4$ electrolyte (50 mM). **(A)** plate electrode configuration; **(B)** grid electrodes.

**Figure 12** : (A) chlorine, (B) chlorate, and (C) perchlorate concentration ($mgCl \, L^{-1}$) evolution versus electrolysis time using plate electrode configuration (circles) and a grid electrode configured and dimensioned according to the invention (squares) ; with $Q_l = 10.8 \, L \, h^{-1}$, $I = 4 \, A$ and $[Cl^-]_0 = 560 \, mgCl.L^{-1}$.

**Figure 13** : Evolution of dissolved total organic carbon (TOC), in $mgC \, L^{-1}$) as a function of the treatment time by anodic oxidation.

**Figure 14** : Evolution of the three-dimensional excitation-emission matrices of the landfill leachate **(A)** before the treatment and **(B)** after 12 hours of treatment by anodic oxidation in an anodic reactor with a grid electrode configured and dimensioned according to the invention ; emissions wavelength between 280 nm and 600 nm with a data interval of 0.5 nm and excitation wavelength between 200 and 500 nm with a data interval of 10 nm.

**Figure 15** : (A) Evolution of total nitrogen (NT, in $mgN \, L^{-1}$) as a function of the treatment time by anodic oxidation. **(B)** Evolution of the ratio between the ultimate biological oxygen demand ($BOD_u$) and the chemical oxygen demand (COD) as a function of the treatment time by anodic oxidation.

In the figures, flowcharts and block diagrams illustrate the architecture, functionality and operation of possible implementations of systems, methods according to various embodiments of the present invention.

## DETAILED DESCRIPTION OF THE INVENTION

### Definitions

As used herein **"continuous treatment"** of an effluent relates to the treatment of said effluent as it flows through the system of treating without stay of the effluent, particularly in the anodic oxidation compartment. Accordingly, in some instances, the system is continuously fed by a flow of a concentrated effluent.

**"Concentrated effluent"** as used herein refers to an effluent with a chemical oxygen demand (COD) of between $0.2 \, kg. \, m^{-3}$ and $50 \, kg. \, m^{-3}$. Said effluent can be any selected, for example from a landfill leachate or a concentrate thereof, an effluent from the pharmaceutical, cosmetic or textile industry, a soil washing effluent, a concentrate from a membrane based effluent treatment. Such concentrated effluents are hardly degradable by biological processes. More particularly, said concentrated effluent can comprise biorecalcitrant compounds and/or pollutants as phenols, chlorophenols, dyes, pharmaceuticals or drugs as but not limited to, antiobiotics, hormons, or NSAID, or pesticides as, but non-limited to herbicides, insecticides or fungicides. A concentrated effluent can also comprise nitrogen compounds as organic nitrogen, ammonium / ammoniac, nitrate or chlorinated compounds as organochlorinated compounds, chloride ions. The system of the invention allows an energy sober conversion of these biorecalcitrant compounds.

**"Organic compounds"** refers to any organic molecule, comprising or not comprising one or more heteroatom, such as, but not limited to, organic nitrogen compounds or organochlorinated compounds.

The terms **"substantially the same"** when referring to a physical quantity or measure, means that said physical or measure would not be considered by the skilled in the art as a quantity or a measure significantly different or leading to a result different significantly than a refence value. In a particular embodiment, a physical quantity or measure "substantially the same" than another is a physical quantity or measure that is within the rounding-off convention interval. In a particular embodiment, "substantially the same" refers to that said physical quantity or value that do not differ of more than 10% or less.

**"Mineralization"** refers to the decomposition (i.e., oxidation) of the organic part of an effluent to $CO_2$ and other inorganic / mineral products. It corresponds to the ultimate degradation of organic substances resulting in the production of inorganic compounds. Also, a complete mineralization of an organic compound results in the production of $CO_2$ and inorganic compounds. A "partial mineralization" or the partial production of inorganic compounds refers to the cases where, using the anodic oxidation reactor according to the invention only few of the compounds are totally converted into CO2 and inorganic compounds. In that case, for the others, the electrochemical degradation did not result in the complete mineralization of said compounds, but in the conversion of organic compounds into intermediate degradation by-products of organic compounds. Said intermediate degradation by-products can comprise biodegradable organic compounds through e.g. a biological treatment reactor, and still not biodegradable organic compounds which necessitate in an amount that necessitates a further anodic oxidation round through the anodic reactor of the invention.

Concentrated effluents, among which mature landfill leachates (MLLs) represent a very specific class of industrial effluents. They are characterized by their (i) high conductivity, (ii) high concentration of nitrogen compounds, (iii) high concentration of recalcitrant organic compounds. Different management strategies are adopted depending on national regulations/guidelines or industrial choices. Various processes (e.g., biological treatment, nanofiltration, reverse osmosis) are always combined to achieve sufficient removal yields. Moreover, in some countries, approaches based on zero liquid discharge are now further considered. It means that the selected treatment strategy must avoid any discharge of liquid effluent into the environment. With this purpose, evaporation processes are sometimes implemented for reducing the volume of effluents, but an important issue remains, related to the management of the resulting concentrates. Whatever the strategy selected, it is therefore important to achieve sufficient removal yields of the nitrogen and organic load.

Anodic oxidation (AO) process is known to be able to remove recalcitrant organic compounds. AO is also known for achieving complete mineralization of organic compounds. However, the cost associated with the energy consumption significantly increases when total mineralization is considered. Moreover, AO is not fully adapted for nitrogen removal since nitrate accumulation can happen during the process. On the other hand, biological processes are very efficient for nitrogen removal but only the biodegradable part of TOC can be treated, which is very low for MLLs.

The device and the method of the invention overcome drawbacks and limitations of AO to optimize its coupling to biological processes, while favoring, as shown in the experimental section, an increase of the amount of degradation by-products with high biodegradability. In a very unexpected way, device and method of the invention is found to allow lowering the production of toxic chlorinated compounds for microorganisms compared to other anodic oxidation processes and devices, making the device and the process of the invention even more advantageous.

**System for a continuous treatment of a concentrated effluent**

A system 100 for a continuous treatment of a polluted concentrated effluent such as: a landfill leachate, an effluent from the pharmaceutical, cosmetic or textile industry, a soil washing effluent, a concentrate from a membrane process, comprising non-biodegradable initial organic compounds with a chemical oxygen demand (COD) of between 0.2 kg. m$^{-3}$ and 50 kg. m$^{-3}$, advantageously a chemical oxygen demand (COD) of between 0.2 kg. m$^{-3}$ and 20 kg. m$^3$, comprising, arranged fluidically in series:

-    at least one anodic oxidation reactor 101 comprising a set of a plurality of cathodes and of boron doped diamond anodes, said cathodes and anodes being grids with meshes and being successively arranged in alternation in said reactor so as :

-    a continuous flow of polluted effluent pass through the openings of meshes of anodes and cathodes grid,

-    to realize, in operation, a continuous degradation of initial non-biodegradable molecules contained in the concentrated effluent:

    •    partially into inorganic products,
    •    partially into biodegradable by-products,
    •    partially into non-biodegradable by-products,

    and

-    at least one biological treatment reactor 102, which is located downstream of the at least one anodic oxidation reactor 101 with respect to the direction of flow of the concentrated effluent, and which is configured to degrade continuously into inorganic products the biodegradable by-products contained in the output of the upstream at least one anodic oxidation reactor flow.

As explained above, and as shown in the experimental section, inventors have been able to conceive an anodic oxidation reactor 101 that is particularly adapted to be used to pretreat concentrated effluents, in order to provide a convenient substrate for a subsequent biological treatment of said effluent. Said biological treatment resulting in an energy efficient mineralization of compounds.

Anodic oxidation is a particularly fast and effective electrochemical process which results in the complete mineralization of organic compounds compounds at the vicinity of the anode, in other words the complete conversion of organic molecules in inorganic compounds ($CO_2$, $CH_4$, $NH_4$, $N_2$ etc). The main drawback of the integral electrochemical mineralization is its high energetic cost. Biological processes can lead to the mineralization of organic compounds at a low energy cost, but sensitivity of living organism to high concentration of organic and/or nitrogen and/or chlorinated compounds is incompatible with biological treatment of concentrated effluents.

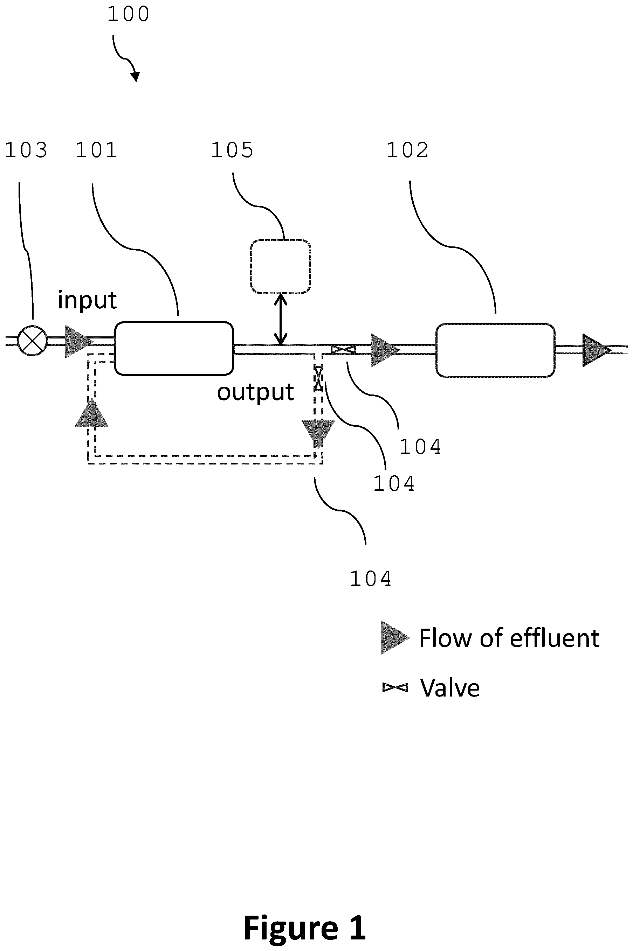

An embodiment of the system 100 of the invention is illustrated in Figure 1 ; it combines at least one anodic oxidation reactor 101 and at least one biological treatment reactor 102 which are arranged fluidically in series : the system is configured so that the concentrated effluent to be treated pass first through the at least one anodic oxidation reactor 101 and then pass through at least one biological treatment reactor 102 fluidically connected at the output of the at least one anodic oxidation reactor.

Using the system of the invention, the effluent is then treated as it flows through the at least one anodic oxidation reactor 101. Maintaining a flow rate in the anodic oxidation reactor contributes to the efficiency of system in favouring high level of mass transport at the vicinity of the electrode, which is of utmost importance in favouring the accumulation of degradation by-products (substrate for biodegradation) and lowering the rate of complete mineralization of organic compounds.

Accordingly, in a particular embodiment, the system 100 according to the invention comprises means 103 adapted to generate a continuous flow of the concentrated effluent to be treated. Such means 103 can be pumps or means to apply a pression in the system to favor the flow of effluent through the anodic oxidation reactor 101 and the biological treatment reactor 102 which are fluidically connected or arranged in series. In a particular embodiment said means 103, pumps or means to apply a pression are configured to generate a flow with a velocity through the openings of the meshes comprised between 2 m.h$^{-1}$ and 150 m.h$^{-1}$, advantageously between 15 m.h$^{-1}$ and 100 m.h$^{-1}$.

It is to be noticed that the modular organization of system 100 of the invention which comprises the fluidic connection, in series, of the said at last one anodic oxidation reactor 101 and at least one biological treatment reactor 102 allows a wide variety of configurations, provided that said configuration is suitable to pretreat the effluent by a partial anodic oxidation. For example, such a system can a comprise one unit defined as one anodic oxidation reactor 101 and one biological reactor 102 arranged fluidically connected in series, the biological reactor 102 being located downstream (in respect of the direction of the flow of the effluent in the system) of the anodic oxidation reactor 101. In a particular embodiment, the system 100 can comprise several units as precedingly defined, said units being arranged, in the system 100, in series or in parallel. A preferred arrangement, in case the system 100 comprises several units, being a system 100 in which said units are arranged in parallel, in order to improve the capacity of the system 100.

One unit as defined above can comprise means to recirculate (or to redirect) 104 at least a part of the pretreated the effluent from the outlet of the at last one anodic oxidation reactor 101 toward the inlet of said reactor. This can allow for example the degradation of non-biodegradable organic compounds as defined above that could subsist in the pretreated concentrated effluent after a former passage through the at least one anodic oxidation reactor. Said recirculation means 104 can be a recirculation circuit. Recirculation means 104 can comprise a further fluidic connection of the outlet of the effluent of the at last one anodic oxidation reactor to the inlet of the same reactor. Recirculation means 104 can comprise at least one valve which can be configured in order to conduct the flow either to the biological treatment reactor 102, or back to the anodic oxidation reactor 101.

In another embodiment the system 100 can comprise several anodic oxidation reactors 101 arranged in series in order to improve the degradation rate of non-biodegradable organic compounds into biodegradable by-products.

The sufficient degradation of the concentrated effluent at the outlet of the at least one anodic oxidation reactor of the invention can be assessed by means configured to assess the degradation 105 of the non-biodegradable compounds after the anodic oxidation.

Accordingly, the system 100 according to the invention said means configured to assess the degradation 105 can comprise means adapted to measure Chemical Oxygen Demand (COD) and/or the Biochemical Oxygen Demand (BOD) and/or the Total Organic Carbon (TOC) in the pretreated effluent at the output of the at least one anodic oxidation reactor. In a particular embodiment said means are configured to allow to take a aliquot of the effluent at the output of the at least one

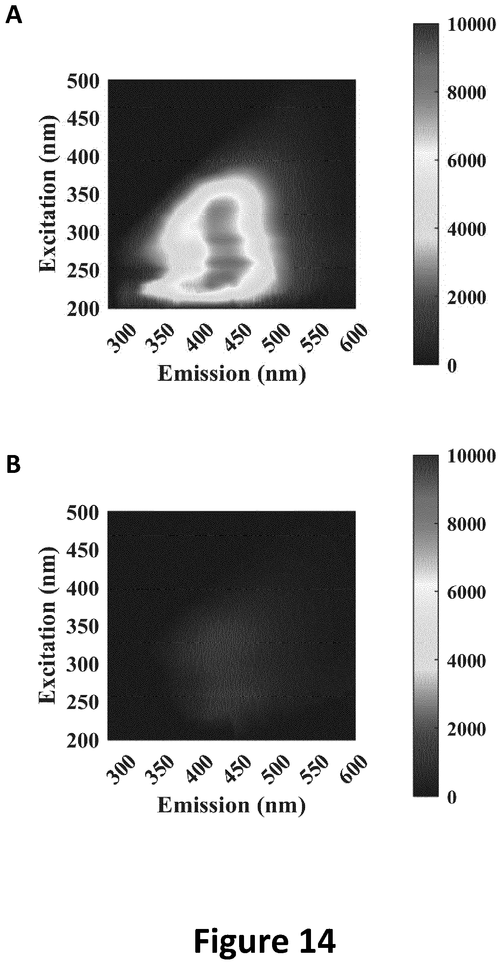

The system 100 according to the invention, said means configured to assess the degradation 105 can comprise a means adapted to measure fluorescence levels of the effluent at the output of the at least one anodic oxidation reactor 101. Indeed, as shown in the experimental section, it has been found of the pretreated concentrated effluent is indicative of the effectiveness of the degradation of non-biodegradable compounds through the at least one anodic oxidation reactor of the invention (as shown in Figure 14). In a particular embodiment, the system 100 comprises a spectro fluorophotometer configured to measure fluorescence at the output of the at least one anodic oxidation reactor. In a more particular embodiment said spectro fluorophotometer is configured to apply excitation wavelengths of between 200 - 500 nm and measure emission wavelengths of between 280 - 600 nm. Means configured to assess the degradation 105 being adapted to measure fluorescence levels are particularly advantageous as they can be implemented so as to allow an analysis in real time of the effluent at the output of the at least one anodic oxidation reactor 101. In an even more advantageous embodiment said means configured to assess the degradation 105 being adapted to measure fluorescence levels are operably connected with recirculation means 104 ; in that case they can be configured to, when a fluorescence levels showing an insufficient degradation of the concentrated effluent at the output of the at least one anodic oxidation reactor 101, redirect the effluent flow at the output toward at least one anodic oxidation reactor 101 ; they can be configured to, when a fluorescence levels showing a sufficient degradation of the concentrated effluent at the output of the at least one anodic oxidation reactor 101, redirect the effluent flow at the output toward at least one biologic treatment reactor102. In an embodiment, the degradation measured at the output degradation at the output of at least one anodic oxidation reactor 101 can be considered as sufficient when the emitted fluorescent measured 280 - 600 nm at the output of at least one anodic oxidation reactor is reduced of at least 20%, 30%, 40%, 50%, 60%, 80% or even 90% in regard to the fluorescence levels measured in the untreated effluent. In a particular embodiment, the degradation measured at the output of at least one anodic oxidation reactor 101 can be considered as sufficient when the emitted fluorescent measured 280 - 600 nm at the output of at least one anodic oxidation reactor is reduced of at least 20%, 30%, 40%, 50%, 60%, 80% or even 90% in regard to the fluorescence levels measured in the untreated effluent. In a particular embodiment, the fluorescence is measured using a three-dimensional excitation-emission matrice as exposed in the experimental section (see also Figure 14), which allows to assay the degradation of different kinds of compound families.

The system 100 of the invention can be configured so that when fluorescence, COD, TOC, or BOD levels measured at the output of the at least one anodic oxidation reactor 101 show a presence of non-biodegradable compounds at an unsatisfactory level, then the pretreated effluent is, for example, redirected through a further fluidic connection (a recirculation circuit) 104 of the outlet of the effluent to the inlet of the same anodic oxidation reactor 101, or directed to another anodic oxidation reactor 101 with grid electrodes as described herein, before being subjected to a biological treatment.

In a particular embodiment, a threshold of the level of non-biodegradable by products and/or initial non-biodegradable compounds can be set to determine if the effluent has to be redirected to at least one anodic oxidation reactor 101. Said threshold can be defined e.g. as a concentration of non-biodegradable organic compounds, a concentration of non-biodegradable organic compounds, a measure fluorescence levels in the effluent which is assayed before directing the biological treatment reactor. Also, the number N of number of recirculation steps to apply, before e.g. the assessment of the content of the treated effluent in non-biodegradable organic compounds (either initial organic compound or by-products compounds) can be set.

In a more particular embodiment, threshold value is defined so that in the effluent the concentration of remaining non-biodegradable initial organic compounds after the N steps of recirculation is inferior to 20% of the initial concentration of the non-biodegradable initial organic compounds, advantageously inferior to 10% of the initial concentration of the non-biodegradable initial organic compounds.

The system 100 of the invention comprises at least one biological treatment reactor 102 which is configured to continuously receive a flow of pretreated concentrated effluent from the outlet of the anodic oxidation reactor 101, therefore enriched in biodegradable degradation by-product of the organic and/nitrogen and/or chlorinated compounds of the concentrated effluent. Biological treatment of effluent are well known in the art and reviewed in Narayanan and Narayan (2019). It consists in using microorganisms in various methods to reduce and mineralize different types of compounds pollutants present in the effluent and to reduce biochemical oxygen demand of the effluent. The at least one biological treatment reactor 102 can be configured to realize : aerobic processes based on fixed and / or free biomass, anaerobic processes based on fixed and / or free biomass, each of these biological treatment being possibly coupled and separated by a separation step based on a settling process or a membrane process. In a particular embodiment, the at least one biological treatment reactor 102 is configured to convert:

- continuously inorganic nitrogen compounds in by-products such as $N_2$,
- chlorinated inorganic compounds in by-products such as chloride ions, thereby resulting in the complete mineralization of nitrogen and/or chlorinated organic compounds.

Because of the continuous treatment it allows, the system 100 according to the invention is particularly adapted to be implemented online with the flow of waste production of water treatment plant.

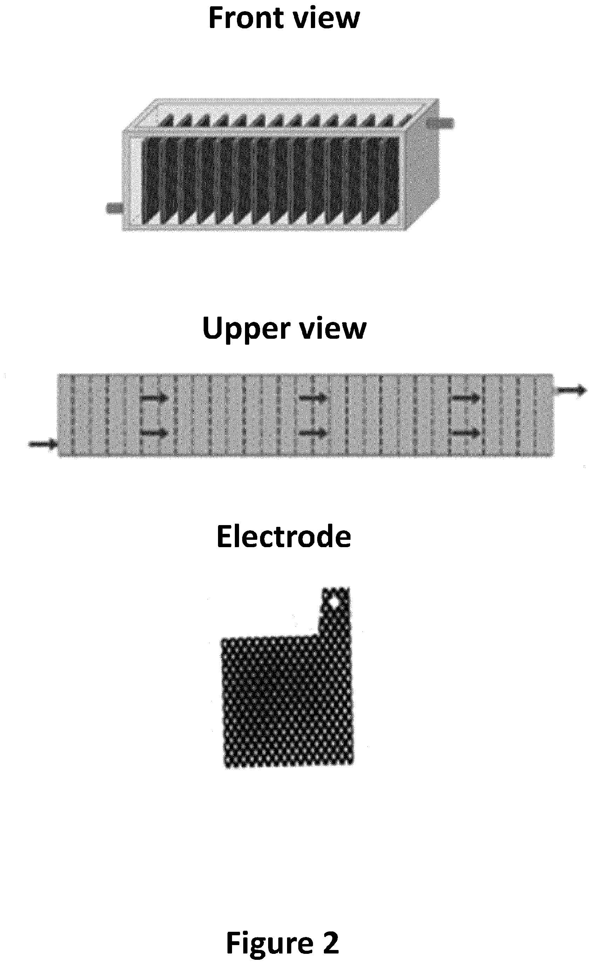

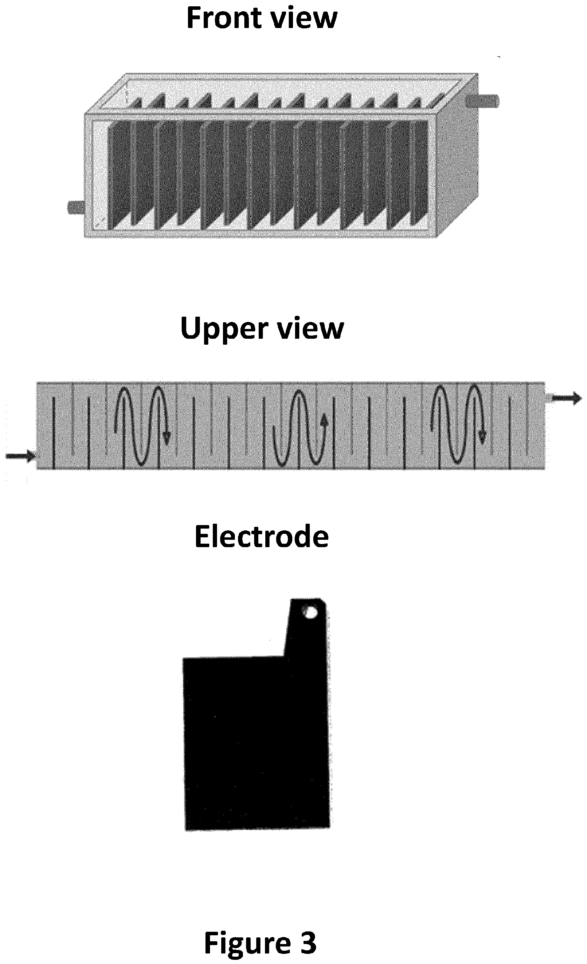

Figure 2 depicts an embodiment of an anodic oxidation reactor 101 of the system of the invention, in which the anodes and cathodes are grids which comprise meshes, which are arranged alternately within the reactor 101 so as the flow of the effluent passing through the anodic oxidation reactor 101 has to pass successively through an anode then through a cathode or conversely. In this illustrated embodiment, the electrodes (the grids) are arranged so that to be substantially perpendicular to the direction of the flow of the effluent within anodic oxidation reactor. Accordingly, the electrodes (the grids) are substantially parallel in said reactor. In the anodic oxidation reactor 101 of the system 100 of the invention, electrode grids completely fit to the internal dimension of the reactor 101 of the transversal section (relative to the direction of the effluent flow), so that the effluent flow is forced to pass through the electrode grids. This particular configuration, responsible for particular hydrodynamic conditions when compared to a control anodic oxidation reactor (see Figure 3, experimental section, configuration with plate electrodes) has been shown to be less favorable to the complete mineralization of the organic compounds as defined above and to significantly improve the accumulation of biodegradable by-products substrate for the subsequent biological degradation in the biological treatment reactor fluidically downstream connected (Figure 1).

In a particular embodiment, the anodic oxidation reactor 101 comprises the same number of cathodes and anodes. In a more particular embodiment said number is above or equal to 10, 11, 12, 13, 14, 15, 16, 18, 19, 20, 25, 30, 35, 40, 45, 50 or even more.

In another particular embodiment, anodes are completely covered by a boron doped diamond layer. In a particular embodiment, the anodes are only partially covered by a layer of boron doped diamond. In a more particular embodiment, the anodes are only partially covered by a layer of boron doped diamond on their part which is immersed, in the anodic oxidation reactor, in the flow of concentrated effluent.

A cathode in anodic oxidation reactor 101 of the invention is made of, or covered with, any material that is suitable to be used with an effluent which comprises organic or nitrogen and/or chlorinated compounds and which fulfills the requirements of the electrochemical reaction. Typically, said material is chosen among : stainless steel, carbon based materials as graphitic carbon, metal based materials as titanium and/or metal oxide based materials as ruthenium or iridium oxide.

A boron doped diamond (BOD) anode can comprise a substrate made of any material suitable with electrochemical applications and deposition of a layer of BDD. In a particular embodiment said anode is made of a thin film of BDD deposited onto a niobium (Nb) substrate. In a more particular embodiment, in the anodic oxidation reactor 101, the anodes are made of a thin film of BDD deposited onto a niobium (Nb) substrate and the cathodes of stainless steel.

Obviously, features of the anodic oxidation reactor 101 as the number of the electrodes (grids), the total active surface of the electrode grids, the number of the openings of the meshes, the size of the openings of the meshes, the ratio of the surface of the openings of the meshes of the anode grids to the total geometric surface of the anode grid, the velocity of the flow through the openings of the meshes in the anodic oxidation reactor 101, can greatly vary as a function of the dimensions and the capacity of the system. These features can be modified in order to improve the performances of anodic oxidation reactor 101 in the system 100 of the invention (i.e. in order to improve the formation of biodegradable by-products available for the downstream biological degradation, from the non-biodegradable organic compounds present in the effluent.

Inventors have been able to determine parameters that could allow verifying the optimization of the mass transport coefficient at the vicinity of the electrodes in the at least one anodic oxidation reactor 101 of the system 100 according to the invention. These parameters aim at verifying the features of the anodic oxidation reactor 101 are not detrimental to mineralization kinetics but disadvantage the complete mineralization of the organic compounds, thereby resulting in the degradation of non-biodegradable organic compounds into biodegradable compounds, which are available for the downstream biological degradation. In an embodiment, these parameters can be compared to their value measured in a system implementing a control anodic oxidation reactor (as illustrated in Figure 3), wherein plate electrodes replace the electrode grids and wherein the active surfaces of the plates and grid anodes closely match each other. In a particular embodiment, said control anodic oxidation reactor, within which plates electrodes replace grid electrodes, is of the same volume, with the same number of electrodes, with inlet and outlet at the same place than in the anodic oxidation reactor 101 of the invention. In another particular further embodiment of said control anodic oxidation reactor, said control reactor is implemented within a system 101 with the same organization than the anodic oxidation reactor 101 of the invention.

More particularly, the at least one feature of the anodic oxidation reactor 101 is configured to achieve a first order degradation of the non-biodegradable molecules rate constant 1.5 fold higher than the first order degradation rate constant using the control anodic oxidation reactor.

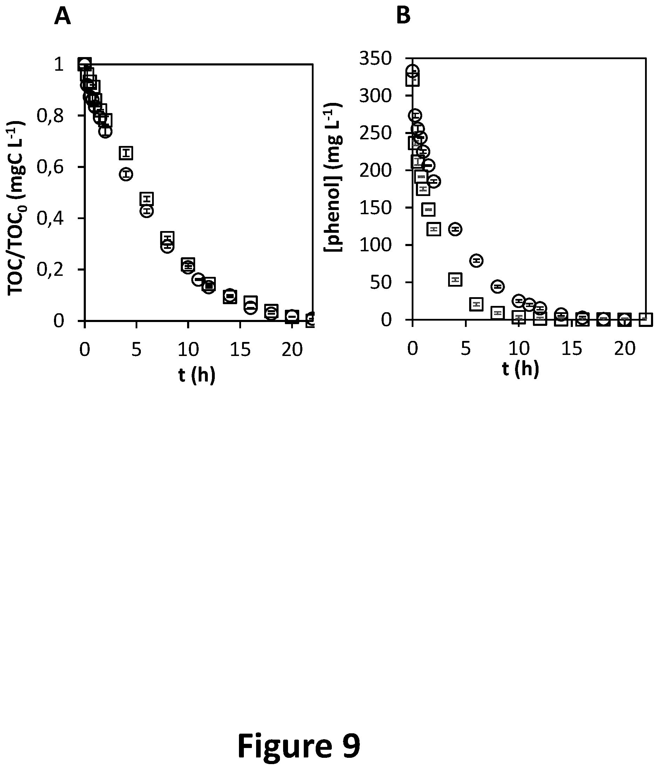

The mineralization kinetics can be assessed as exemplified in Figure 9A by measuring normalized Total Organic Carbon ($TOC/TOC_0$) level evolution as a function of time in the effluent. As described, said kinetics in an anodic oxidation reactor with electrodes grids of the system of the invention should be at least comparable (if not improved) to the kinetics observed in the control anodic oxidation reactor with plate electrodes.

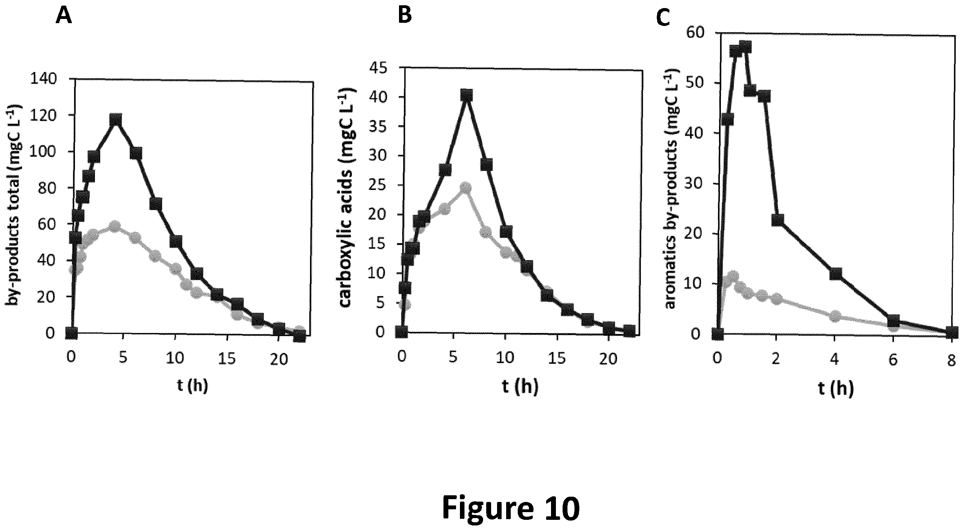

The suitable accumulation of biodegradable by-products resulting from degradation of non-biodegradable organic compounds of the concentrated effluent can be assessed by measuring an improvement of the degradation kinetics of non-biodegradable compounds in an anodic oxidation reactor with electrodes grids of the system of the invention when compared to the kinetics observed in the control anodic oxidation reactor with plate electrodes. Such kinetics can be assayed by measuring normalized Chemical Oxygen Demand ($COD/COD_0$) level evolution as a function of time, or, more preferably the evolution as a function of time ratio of the ultimate Biochemical Oxygen Demand (uBOD) to Chemical Oxygen Demand (COD). Preferably, the at least one feature is configured to accumulate at least 1.5-fold, 2-fold, 3-fold or even more, more biodegradable by-products from the partial degradation of the non-biodegradable compared to the control anodic oxidation reactor (as exemplified in e.g. Figure 10).

TOC is a well-known measure of the total amount of carbon in organic compounds, it can be measured, for example, as described in section 1.9 of the example section. COD is known in the art as measuring the amount of oxygen needed to oxidize total organic and inorganic compounds. It can be assayed as described in section 1.9 of the example section. Biochemical oxygen demand is a well-known analytical parameter in the art which represents the amount of dissolved oxygen consumed by aerobic bacteria growing on an organic material. The ultimate BOD is the amount of oxygen required to decompose all of the organic material. According to the invention, the ultimate BOD is determined at at least 10 days, preferably 15, 20, even more preferably 25 days. Accordingly, the more biodegradable organic compounds are present the more important the ratio uBOD/COD. Methods for measuring BOD are well known in the art ; an exemplary method is described in Rodier (2009). In a preferred embodiment, the features of the anodic oxidation reactor of the system of the invention are chosen so as to obtain an effluent at the output of said anodic oxidation reactor with a ratio uBOD/COD of at least 0.3, advantageously of at least 0.5.

In a particular embodiment, both of the above mineralization kinetics and degradation kinetics of non-biodegradable compounds can be assayed using a reference compound as e.g. phenol (or any other organic and/or nitrogen and/or chlorinated compounds non-biodegradable compound) as shown for example in Figure 9B or 10.

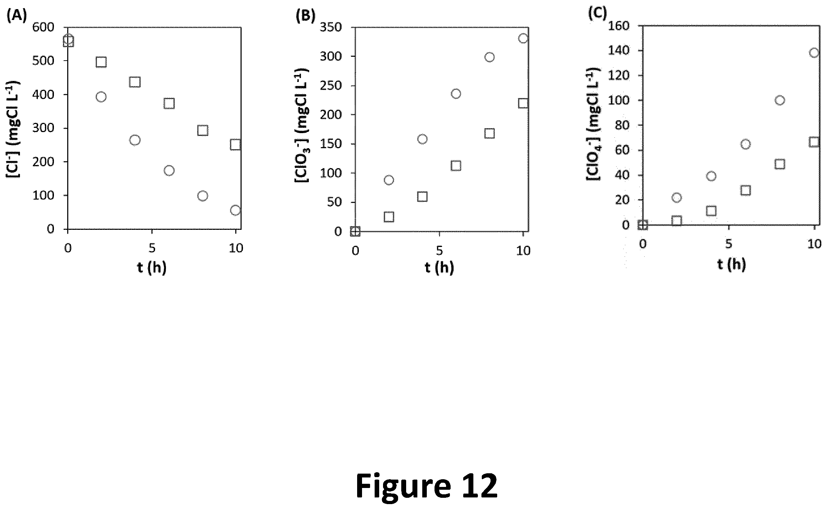

Advantageously, the formation of undesirable by-products of chloride ion oxidation, such as chlorates and/or perchlorates, can also be further assayed to identify an anodic oxidation reactor 101 suitable for the system 100 of the invention. The features of the said anodic oxidation reactor should be such as allowing a lower production of by-products of chlorate degradation, such as perchlorates when compared to the control anodic oxidation reactor with plate electrodes. This can be assayed as for example by comparing the formation of chlorates and or perchlorates as shown in Figure 12, in the anodic oxidation reactor with grid electrodes and in the corresponding control anodic oxidation reactor 101.

As shown in the experimental section, the mass transport coefficient ($k_m$) optimisation is a key parameter for the effectiveness of the system of the invention. The inventors have found that $k_m$ in the anodic oxidation reactor of the system of the invention is at least 30% higher compared to a control anodic oxidation reactor with electrode plates (table 6). Accordingly, in a particular embodiment of an anodic oxidation reactor of the system of the invention, said mass transport coefficient $k_m$ determined for phenol as a control compound and using an inert electrolyte (NaNOs), as described in the 2.1.2 of the experimental section, is of at least of 5 $\mu$m.s$^{-1}$ In another particular embodiment, the features of the anodic oxidation reactor are chosen in order to optimize coefficient ($k_m$), measured as described in the 2.1.2.

In a particular embodiment, the flow rate and the design of said boron-doped diamond anode are chosen so as to optimize the mass transport coefficient $k_m$ of phenol to the anode surface, which is quantified numerically from experimental data with low initial concentration of phenol, such as the removal of COD is limited by mass transport phenomena, as model pollutant by determining the value of km from calibration of the following model with experimental data of COD (chemical oxygen demand) removal in the considered reactor, according to the equation :

$$\frac{\partial C}{\partial t} = D\,\frac{\partial^2 C}{\partial x^2} - \frac{\partial C}{\partial x} - k_m\,a\,C$$

where C is the COD concentration (gO$_2$ m$^{-3}$), D is the dispersion coefficient (m$^2$ s$^{-1}$), $\overline{u}$ is the mean flow velocity (m.s$^{-1}$), $k_m$ is the mass transport coefficient (m.s$^{-1}$), a is the total active surface of electrodes (A) by reactor volume (V) (a = A/V) (m$^2$.m$^{-3}$), F is the Faraday constant (96485 C.mol$^{-1}$) and I is the current intensity (A). In a more particular embodiment the initial concentration of phenol is of 21mg L$^{-1}$ or even less.

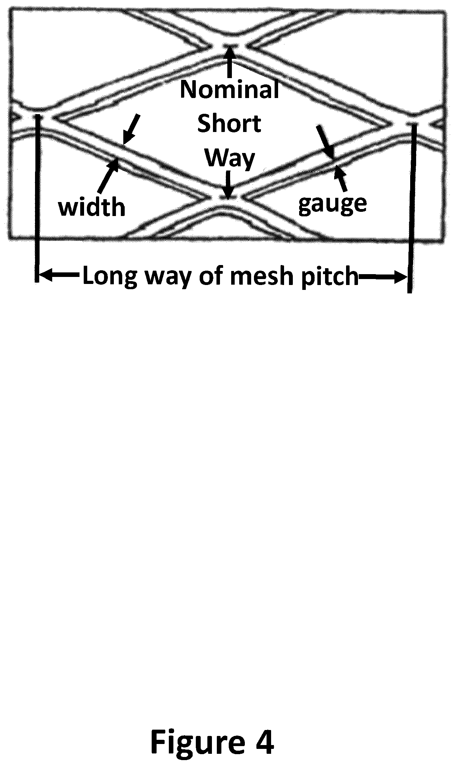

In Figure 2 is shown an embodiment of a grid electrode to be accommodated in the anodic oxidation reactor 101 of the system 100 of the invention. Said grid can present meshes with dimensions (e.g. nominal short way and long way pitch of the mesh, width and gauge of the rid) as illustrated in Figure 4. Experimental data show that such a configuration is responsible for particular hydrodynamic conditions that improve the mass transport coefficient at the vicinity of the electrode, and results, and therefore makes the anodic oxidation reactor particularly suitable to be used in the system of the invention. The dimensions of meshes in the anode and the cathode can be identical or different. In a preferred embodiment, the meshes of the cathode and of the anode are the same.

In a particular embodiment, the anodes of the at least one anodic oxidation reactor 101 of the system of the invention, which are grids, meshes are openings with a length of between 3 mm and 12 mm and a nominal short length of between 2 mm and 8 mm. In another particular embodiment, the anodes have a ratio of the openings surface compared to the total geometric surface of the anode between 5% and 60%, preferably between 10% and 40%. Grids with such features are found to result in an anodic oxidation reactor with hydrodynamic properties favouring the production and the accumulation of biodegradable products from the non-biodegradable compounds (organic and/or nitrogen and/or chlorinated compounds) of the concentrated effluent. Also, surprisingly, this configuration results in a significantly lower production of toxic by-products which is of a particular advantage when considering submitting the pretreated effluent through the anodic oxidation reactor to biological treatment implying the use of living organisms.

As mentioned above the anodic oxidation reactor implemented in the system of the invention allowed to make the concentrated effluent suitable to biological treatment by allowing accumulation by-products that constitute substrates for the microorganism and by lowering the concentration of toxic compounds.

**Use of at least one anodic oxidation reactor the degradation of non-biodegradable molecules contained in the concentrated effluent.**

Accordingly a second object of the invention, is a use of at least one anodic oxidation reactor 101 comprising a set of a plurality of cathodes and of boron doped diamond anodes, said cathodes and anodes being grids with meshes and being successively arranged in alternation in said reactor so as a continuous flow of polluted effluent passes through the openings of meshes of anodes and cathodes grid, to realize, in operation, the degradation of non-biodegradable molecules contained in the concentrated effluent:

- partially into inorganic products,
- partially into biodegradable by-products,
- partially into non-biodegradable by-products.

The invention relates to said use of anodic oxidation reactor 101 in any of its embodiments as specified in the previous section.

The system 100 of the invention is adapted to implement a process through which most of the biorecalcitrant organic compounds present in a concentrated effluent are submitted to a gentle electrochemical degradation to avoid a complete degradation and mineralization of the compounds. This only partial electrochemical degradation of biorecalcitrant organic compounds into biodegradable by-products during a gentle anodic oxidation reaction which does not lead to the complete mineralization of compounds, allowed the use of energy saving and cost-effective biological treatments of the pretreated effluent.

**Process for treating in a continuous flow at least one concentrated effluent**

A third object of the invention is therefore a process for treating 200 in a continuous flow at least one concentrated effluent of a chemical oxygen demand (COD) of between 0.2 kg. m$^{-3}$ and 50.0 kg. m$^{-3}$, advantageously a chemical oxygen demand of between 0.2 kg. m$^{-3}$ and 20 kg. m$^{-3}$, comprising the implementation of any of the embodiments of the system as described above and comprising the following steps :

- at least one step of treating the concentrated effluent by anodic oxidation 201 said at least one effluent, and
- at least one step of treating the product of the anodic oxidation treatment, by a biological treatment 203.

As explained above, in said process implemented by the system according to the invention the step of treating the effluent by anodic oxidation 201 consists in an only a partial mineralization of non-biodegradable compounds in said effluent and in an enrichment in biodegradable degradation by-products of low toxicity. The effluent so pretreated is particularly adapted to a biological treatment aiming at a cost effective and low energy mineralization of the organic and/or nitrogen and/or chlorinated compounds.

The at least one step of treating the product of the anodic oxidation treatment by a biological treatment 203 is implemented in the biological treatment reactor, wherein the further degradation the organic and/or nitrogen and/or chlorinated compounds resulting in the further degradation of said compounds toward complete mineralization.

As exemplified, the velocity of the concentrated effluent through the openings of the meshes of grid electrodes in the at least one anodic oxidation reactor is one of the features related to the optimization of mass transport at the vicinity of the electrode in order obtain a reaction equilibrium favoring the accumulation of degradation by-product of the bioreacalcitrant species present in the concentrated effluent. In an embodiment of the process according to the invention said velocity is comprised, at least in the anodic oxidation reactor 101, between 2 m.h$^{-1}$ and 150 m.h$^{-1}$, advantageously between 15 m.h$^{-1}$ and 100 m.h$^{-1}$.

In a particular embodiment of the process of the invention the current density applied in the at least one anodic oxidation reactor is between 2 mA.cm$^{-2}$ and 100 mA.cm$^{-2}$, advantageously between 5 mA.cm$^{-2}$ and 50 mA.cm$^{-2}$.

In an embodiment, the process comprises a further step of measuring 202 the chemical oxygen demand (COD) and/or the ultimate ratio BOD/COD and/or the total organic carbon (TOC) and/or fluorescence levels of the effluent after the at least one step of treating the effluent by anodic oxidation 101. Indeed, as shown in the experimental section these quantities allow to estimate the level of degradation of biorecalcitrant organic compounds in the pretreated effluent and the suitability of said pretreated effluent to biological treatment.

In a particular embodiment of the process according to the invention, when COD and/or BOD and/or TOC and/or fluorescence level of the effluent does not reach a reference value, then the pretreated effluent is subjected to a further step of treating the concentrated effluent by anodic oxidation 201, which can be repeated until this reference value is reached (or a threshold value), as explained above. In another particular embodiment, said reference value is set as equal or inferior to 20% of the initial concentration of non-biodegradable of the non-biodegradable initial organic compounds.

In another particular embodiment, the process according to the invention comprises an optional step of preparing the concentrated effluent for its passage in the anodic oxidation reactor 101. Said preparation can comprise the filtration or the settling of the effluent so as to avoid clogging and/or congestion that might negatively impact the shifting of equilibrium of the degradation reactions in the anodic oxidation reactor in favor of the accumulation of biodegradable by-product-.

A suitable supporting electrolyte that can be used, for, e.g., assessment of the features of the anodic oxidation reactor. In a particular embodiment said supporting electrolyte can be used to dilute the concentrated effluent before its treatment in the anodic oxidation reactor. In a particular embodiment said supporting electrolyte in an inert electrolyte. In a more particular embodiment said supporting electrolyte is NaNOs.

**EXAMPLES**

Table 1 : list of abbreviations

| | |
|---|---|
| **AO:** anodic oxidation | **AOB:** ammonia oxidizing bacteria |
| **BOD :** Biochemical Oxygen demand | **BDD:** boron-doped diamond |
| **C_EP:** polarization of the electrodes with a current intensity and no aeration | **C_A:** aeration by a floor diffuser of fine bubbles and no current at the electrodes |
| **COD:** chemical oxygen demand ($mgO_2$ $L^{-1}$) | **C_W:** no electrode polarization and no aeration |
| **CSTR:** continuous stirred-tank reactor | **CE:** current efficiency |
| D: dispersion coefficient ($cm^2$ $min^{-1}$) | $D_i$: diffusion coefficient of species i ($m^2$ $s^{-1}$) |
| **EC:** electrical energy consumption (kWh $g^{-1}$) | **EAOPs:** electrochemical advanced oxidation processes |
| **F:** Faraday constant (96485 C $mol^{-1}$) | **E(θ):** distribution function |
| **HPLC:** high performance liquid chromatography | **HER:** hydrogen evolution reaction |
| **IC:** inorganic carbon | **HRT:** hydraulic retention time (t) |
| $K_{I,X}$: inhibiting constant of species X | **IOA:** index of agreement |
| **LPM:** liters per minute | $k_m$: mass transport coefficient (m $s^{-1}$) |
| **MBBR:** moving bed biofilm reactor | **MAOFR:** modular anodic oxidation flow reactor |
| **ME:** model efficiency | **MCE:** mineralization current efficiency |
| **NOB:** nitrite oxidizing bacteria | **MLL:** mature landfill leachate |
| **NF:** nitritation factor | **MSW:** municipal solid waste |
| **OER:** oxygen evolution reaction | **NPOC:** non-purgeable organic carbon (mgC $L^{-1}$) |
| **OM:** organic matter | **·OH:** hydroxyl radical |
| **RTD:** residence time distribution | $Q_l$: liquid flow rate (L $h^{-1}$) |
| **SRT:** sludge retention time | **SEC:** specific energy consumption per volume unit (kWh $m^{-3}$) |
| **TN:** total nitrogen | **STR:** stirred-tank reactor |
| **TIC:** total inorganic carbon | **TNH:** total nitrogen under ammoniacal form |
| $\overline{u}$: mean flow velocity (m $s^{-1}$) | $\overline{t_s}$ : mean residence time or first moment order |
| $\sigma^2$: variance or second moment order | $V_T$: total volume (L) |
| $\tau$: residence time | $\gamma$: skewness factor or third moment order |
| $\mu$: order moment | |

**1.** Materials and Methods

1.1 Modular anodic oxidation flow reactor

The modular anodic oxidation flow reactor used A MAOFR composed of 28 parallel electrodes was used. The 14 anodes and 14 cathodes were placed alternately in the reactor. Two electrode configurations were used including (i) plate electrodes (Figure 3) and (ii) grid electrodes (Figure 2). Plate and grid anodes were made of a thin film of BDD deposited onto a niobium (Nb) substrate (Diachem® electrode from Condias, Germany). The dimensions of plate anodes were $5 \times 6$ cm. Plate and grid cathodes were made of stainless steel from Goodfellow (United Kingdom) and Negofiltres (France), respectively. The dimensions of grid anodes were $6 \times 6$ cm. The dimensions used for description of grid electrodes can be described using the dimensions indicated in Figure 4. The nominal short way of grid, the long way of grid, the width and the gauge were 4, 6, 1 and 1 mm, respectively. The percent of void ascribed to shape of holes was estimated around 20%. The total active surfaces of the plate and grid anodes closely matched each other after the removal of the hole surfaces from the grid anodes.

For the configuration with plate electrodes, the liquid flowed into the reactor following a serpentine array (Figure 3). For the configuration with grid electrodes, the liquid flowed through the grid structure of electrodes (Figure 2). The total volume of the reactor was around 1.75 L and the total geometrical surface area of electrodes was around 624 and 644 $cm^2$ for plate and grid electrodes, respectively. The flow rate and operating conditions generated little variations of both active reactor's volume and surface areas of electrodes (Table 2 and Table 3). For the configuration with grids, the fluid velocity through the openings of the meshes is defined as the ratio between the flow rate (in $m^3 h^{-1}$) and the surface of the openings of the meshes of one grid electrode (in $m^2$). For example, at 10.8 L $h^{-1}$, the immersed height of gids was 4.7 cm, the surface of the openings of the meshes of one electrode grid was thus 6*4.7*0.2 = 5.6 $cm^2$, resulting in a fluid velocity through the openings of the meshes of 19 m $h^{-1}$.

Table 2. Reactor's volume for plate and grid electrodes configurations at different liquid flow rates.

| Flow rate (L $h^{-1}$) | | | 1.5 | 3.6 | 10.8 | 18 | 30 | 60 |
|---|---|---|---|---|---|---|---|---|
| Reactor's volume (L) | Plate electrodes | $C_W$ and $C_{EP}$ | 1.62 5 | 1.6 4 | 1.6 8 | 1.7 4 | 1.7 7 | 1.8 8 |
| | | $C_A$ | 1.52 5 | 1.5 4 | 1.5 8 | 1.6 4 | 1.6 7 | 1.7 8 |
| | Grid electrodes | $C_W$ and $C_{EP}$ | 1.77 | 1.7 7 | 1.8 0 | 1.8 3 | | |
| | | $C_A$ | 1.67 | 1.6 7 | 1.7 0 | 1.7 3 | | |

Table 3. Total electrode geometrical surface area for plate and grid electrodes configurations at different liquid flow rates.

| Flow rate (L $h^{-1}$) | | 1.5 | 3.6 | 10.8 | 18 | 30 | 60 |
|---|---|---|---|---|---|---|---|
| Total electrode geometrical surface area ($cm^2$) | Plate electrodes | 604.3 | 609.9 | 624.8 | 647.1 | 658.3 | 699.2 |
| | Grid electrodes | 623.5 | 629.2 | 644.6 | 667.6 | | |

The reactor was built with a fine bubble diffuser floor that can be used for aeration of the reactor (Monteil et al., 2021).

1.2 Chemicals

Sodium perchlorate ($NaClO_4$) was purchased from Alfa Aesar, sodium sulfate ($Na_2SO_4$) from Fluka, potassium phosphate monobasic ($KH_2PO_4$) from Acros Organics, and phenol, potassium hexacyanoferrate (II) trihydrate ($K_4[Fe(CN)_6].3H_2O$) as well as potassium hexacyanoferrate (III) $K_3[Fe(CN)_6]$ from Sigma-Aldrich. Methanol was purchased from Honewell Riedel-de Häden (HPLC grade, ≥99.9%). Solutions were prepared with ultrapure water obtained from a Smart2Pure device (resistivity >18.2 MΩ cm) from Thermo Scientific, France. Organic solvents and other chemicals used were HPLC or analytic grade from Sigma-Aldrich, Fluka and Merck.

1.3 Residence time distribution

$NaClO_4$ (14.8 mM) was selected as an inert tracer for application in the MAOFR because of the absence of oxidation and reduction of perchlorate in the reactor in the range of current applied. RTD was performed (i) without neither aeration nor electrode polarization (configuration noted as Cw), (ii) with aeration at 0.2 L $min^{-1}$ by the fine bubble diffuser floor but without current supply (noted as $C_A$), and (iii) with electrode polarization but without aeration ($C_{EP}$). The solution conductivity was continuously measured at the reactor's outlet by a conductivity meter. Each experiment was performed in triplicate.

The distribution function E(t) and the normalized function E(θ) were calculated from the concentrations measured at the outlet (*C(t)*) by Eqs. 1 and 2.

$$E(t) = \frac{C(t)}{\int_0^\infty C(t)\,dt} \tag{1}$$

$$E(\theta) = \tau\, E(t) = \frac{C(t)}{C_0} \tag{2}$$

with $C_0$ the concentration of the tracer considering that all the injected mass was homogeneously distributed within the whole reactor and $\tau$ the residence time given in Eq. 3.

$$\tau = \frac{V}{Q_l} \tag{3}$$

The first, second and third order moments ($\mu_1$, $\mu_2$ and $\mu_3$) were then calculated as follows (Eqs. 4, 5, and 6):

$$\mu_1 = \overline{t_s} = \int_0^{t_f} t.E(t).dt \tag{4}$$

$$\mu_2 = \sigma^2 = \int_0^{t_f} (\theta - 1)^2\, E(\theta)\, d\theta \tag{5}$$

$$\mu_3 = \gamma = \int_0^{t_f} (\theta - 1)^3\, E(\theta)\, d\theta \tag{6}$$

with $t_f$ the time for which all the injected mass of $NaClO_4$ was considered as out of the reactor, $\overline{t_s}$ the mean residence time, $\sigma^2$ the variance and $\gamma$ the skewness factor.

1.4 Mass transport

Mass transport of a target compound from the bulk to the anode surface was evaluated by determining the mass transport coefficient (noted $k_m$) according to reactor configuration and flow rate. The coefficient was determined from the limiting current method in a solution containing 100 mM $NaClO_4$, 5 mM $[Fe(CN)_6]^{4-}$ and 20 mM $[Fe(CN)_6]^{3-}$ (Cañizares et al., 2006). An Ag/AgCl (3M KCl) reference electrode was added between two electrodes. The limiting current ($I_{lim}$) for oxidation of $[Fe(CN)_6]^{4-}$ was obtained through cyclic voltammetry (10 mV s$^{-1}$) in the potential range of water stability. The value of the mass transport coefficient for oxidation of $[Fe(CN)_6]^{4-}$ was obtained thanks to (Eq. 7).

$$k_m = \frac{I_{lim}}{nFAC} \tag{7}$$

with A the 2 sides of electrode surface (m$^2$), $I_{lim}$ the limiting current (A), $k_m$ the mass-transport coefficient (m s$^{-1}$), C the $CK_4Fe(CN)_6$ concentration (mol m$^{-3}$), F the Faraday constant (96485 sA mol$^{-1}$), and $n$ the number of exchanged electrons.

1.5 Reactivity experiments

Phenol was used as a model organic compound for assessment of process effectiveness. Different experiments were performed with phenol concentrations in the range 0.01 - 0.6 g L$^{-1}$. Either sodium sulfate or sodium nitrate (50 mM) was used as supporting electrolyte. Experiments were performed with both reactor configurations in either continuous (single pass, 0% recirculation) or batch (100% recirculation) mode.

In continuous mode, samples were taken at the reactor outlet after reaching steady state ($\geq$ three times the hydraulic residence time). Mineralization of phenol was followed through measurements of TOC and COD. Experiments were performed with a flow rate of 10.8 L h$^{-1}$ or 32.4 L h$^{-1}$ and a current intensity of 4 A (corresponding current densities according to reactor configuration are presented in Table 4).

Table 4. Applied current density (japp) for plate and grid electrodes configurations at different liquid flow rates for a current intensity of 4 A.

| Flow rate (L h$^{-1}$) | | 1.5 | 3.6 | 10.8 | 18 | 30 | 60 |
|---|---|---|---|---|---|---|---|
| $j_{app}$ (mA cm$^{-2}$) | Plate electrodes | 6.6 | 6.6 | 6.4 | 6.2 | 6.1 | 5.7 |
| | Grid electrodes | 6.4 | 6.4 | 6.2 | 6.0 | | |

In recirculation mode, the liquid from the outlet of the reactor went to a 0.5 L CSTR, acting as a buffer tank for recirculation of the liquid to the inlet of the reactor. Samples were taken at the reactor outlet.

1.6 Modelling approach

A reactive diffusion/convection model was used to predict the effectiveness of the process according to operating conditions. The model was based on COD removal rate. The following equation was solved numerically by using parameters previously determined experimentally (Eq. 8):

$$\frac{\partial C}{\partial t} = D \frac{\partial^2 C}{\partial x^2} - \overline{u} \frac{\partial C}{\partial x} - r_{AO} \tag{8}$$

where C is the COD concentration (gO$_2$ m$^{-3}$), $D$ is the dispersion coefficient (m$^2$ s$^{-1}$), $\overline{u}$ is the mean flow velocity (m s$^{-1}$) and $r_{AO}$ is the AO rate (gO$_2$ m$^{-3}$ s$^{-1}$). Depending on the regime, $r_{AO}$ was expressed as follows (Monteil et al., 2021):

- under mass transport limitation: $r_{AO} = k_m \, \alpha \, C$

$$r_{AO} = \frac{I}{4 \, F \, V}$$

- under current limitation:

where $k_m$ is the mass transport coefficient (m s$^{-1}$), $\alpha$ is the specific surface of electrodes by reactor volume (a = $A/V$) (m$^2$ m$^{-3}$), F is the Faraday constant (96485 C mol$^{-1}$) and $I$ is the current intensity (A).

1.7 Parameters to evaluate process efficiency

Mineralization efficiency (ME) (Eq. 9) and Index of agreement (IOA) (Eq. 10) were used to determine the model accuracy compared to experimental data:

$$ME = 1 - \frac{\sum_{i=1}^{k}(y_i - z_i)^2}{\sum_{i=1}^{k}(y_i - y_M)^2} \tag{9}$$

$$IOA = 1 - \frac{\sum_{i=1}^{k}(y_i - z_i)^2}{\sum_{i=1}^{k}(|z_i - y_M| + |y_i - y_M|)^2} \tag{10}$$

where $k$ is the number of observed values, $y_i$ is a numerically simulated value, $z_i$ is the corresponding experimentally observed value, $y_M$ is the average of the numerical values.

Electrical energy consumption (EC) (kWh gCOD-') (Eq. 11) and mineralization current efficiency (MCE) (%) (Eq. 12) allowed the determination of process efficiency and energy consumption:

$$EC = \frac{U \, I \, 10^{-3}}{\Delta COD \, Q_l} \tag{11}$$

$$MCE = \frac{n \, F \, Q_l \, \Delta TOC}{4.32 \, 10^7 \, m \, I} = \frac{28 \, F \, Q_l \, \Delta TOC}{4.32 \, 10^7 \, 6 \, I} \tag{12}$$

Where $U$ is the cell voltage (V), $I$ the applied current (A), $\Delta COD = COO_f - COD_0$ (gO$_2$ L$^{-1}$), $Q_l$ the liquid flow rate (L h$^{-1}$), $F$ the Faraday constant (96485 C mol$^{-1}$), $\Delta TOC$ the experimental TOC decay (mgC L$^{-1}$), $n$ is the number of electrons consumed per molecule phenol mineralized according to Eq. 13, 4.32 10$^7$ is the conversion factor to homogenize units (= 3,600 s h$^{-1}$ ×

12,000 mg of C $mol^{-1}$), and m is the number of carbon atoms (6) of a phenol molecule.

$$C_6H_6O + 11H_2O \rightarrow 6CO_2 + 28H^+ + 28e^- \qquad (13)$$

### 1.8 Camera experiment and image processing

Bubbles electrochemically generated at electrode surface and gas phase hydrodynamics near vertical electrodes were observed using a color camera (Basler acA1920 - 150uc, Germany, 8 bits, 144 Hz, $1344 \times 1024$ pixels$^2$) placed in front of the 7th compartment region of the reactor. The camera was fitted separately with two lenses: (1) macro lens X6 11-69 mm to reach a spatial resolution of approximately 0.077 mm/pixel, and (2) micro lens Krüss to reach a spatial resolution 0.0013 mm/pixel. Behind the reactor, a Phlox white backlight panel was equipped to illuminate electro-generated bubbles by the shadowgraph technique.

Acquired images were processed with Matlab software using the following procedure. Each raw color image recorded was converted to an image with grey levels and then to a qualitative color map. The following steps of image processing were carried out using the Image Processing Toolbox in Matlab® (R2017b): (i) defining background image before applying the electrical current intensity (i.e. without bubbles), (ii) defining the threshold using the multi-threshold tool to visualize the exact electrode edges, (iii) masking the electrode in the image and subtracting the electrode from the background in order to visualize only gas and liquid phases, (iv) converting the image to a color map image where red regions are those containing higher gas fractions and yellow ones containing the lower ones.

Bubble velocities ($\overline{u}_{grid}$ and $\overline{u}_{plate}$) were evaluated by measuring the distance travelled by a bubble from two images taken 1 second apart.

### 1.9 Analytical methods

The samples were filtered through 0.45 mm filter paper before analysis to remove most of the particulate compounds.

Mineralization of phenol was followed through measurement of TOC and COD. TOC analyses were carried out using a TOC-L from Shimadzu based on the non-purgeable organic carbon (NPOC) method. Calibration was performed using potassium hydrogen phthalate in the range 0 - 20 mg $L^{-1}$.

COD was measured using photometric COD Cell Test from Supelco in the concentration ranges of 5 to 80 mg $L^{-1}$ and 25 to 1500 mg $L^{-1}$ and analyzed by a Spectroquant NOVA 60 from Merck.

TN analyses were performed thanks to the same TOC-L from Shimadzu with a complementary TNM-L module. Calibration was performed using NaNOs in the range 0-20 mgN $L^{-1}$.

TNH analysis was performed thanks to an ICS-1100 Ion Chromatography System with Dionex IonPac™ CS16 (3 $\times$ 250 mm) column set in an oven at 40°C and Dionex ASRS 300 (4 mm) suppressor set at 32 mA applied current from Thermo SCIENTIFIC. The pump was set at 0.36 mL $min^{-1}$ and the mobile phase was composed of 30 mM methanesulfonic acid.

Three-dimensional excitation-emission matrices (3DEEM) were taken thanks to a RF-6000 Spectro Fluorophotometer from Shimadzu, for emissions wavelength between 280 nm and 600 nm with a data interval of 0.5 nm and excitation wavelength between 200 and 500 nm with a data interval of 10 nm. Scan speed was sated up to 600 nm/min. The spectra obtained can be separated into 5 zones that generally correspond to different kind of molecules (Table 5).

Table 5. Composition of the different 3DEEM spectrum zones (adapted from Jacquin et al., 2017).

| Zone | Composition | Excitation wavelength (nm) | Emission wavelength (nm) |
|---|---|---|---|
| **I** | protein-like molecules | 200-250 | 280-330 |
| **II** | | 200-250 | 330-380 |
| **III** | fulvic-like acids | 200-250 | 380-600 |
| **IV** | soluble microbial products | 250-350 | 280-380 |
| **V** | humic-like acids | 250-500 | 380-500 |

BOD$_u$ analyses were performed according to respirometric method from (Rodier, 2009) in the range 0 - 4000 mgO$_2$ $L^{-1}$ for 60 days. An OxiTop® control system (WTW, Germany) was used as automated system for BOD$_u$ measurement. Each OxiTop® bottle had a working volume of 432 mL and contained 20.7 mL of raw leachate or pretreated leachate, 1 mL of Allylthiourea ($C_4H_8N_2S$) (1 g $L^{-1}$) (to prevent nitrification) and 1 mL of activated sludge from a MBBR reactor who had been previously fed with the pre-treated MLL for 5 weeks. A rubber sleeve with 6 sodium hydroxide pellets was placed inside each bottle to absorb the carbon dioxide produced during the bacterial activity. The continuously stirred bottles were incubated in a dark place at $20 \pm 1$ °C. Each batch of analysis also included one blank. The blank control bottle was filled with osmosed water instead of the leachate, to evaluate the microbial endogenous respiration, which was subtracted from the final $BOD_u$ measurements. $BOD_u$ analyses were made in duplicates. The ratio between the BOD and the COD was plotted for evaluating the biodegradability of the different samples. The higher the ratio, the higher the biodegradability was.

BOD analyses : For these measurements, the range was 0 - 400 $mgO_2$ $L^{-1}$, the BOD test solutions were composed of: 141.6 mL of a mixture of carboxylic acids: oxalic acid (625 mg $L^{-1}$), maleic acid (137 mg $L^{-1}$), glyoxylic acid (261 mg $L^{-1}$), and formic acid oxalic acid (321 mg $L^{-1}$); 10 mL of a buffer solution: $KH_2PO_4$ (8.6 g $L^{-1}$), $K_2HPO_4$ (21.75 g $L^{-1}$), $(Na_2HPO_4,2H_2O)$ (33.4 g $L^{-1}$), $NH_4Cl$ (1.7 g $L^{-1}$); 0.4 mL of- Allylthiourea ($C_4H_8N_2S$) (1 g $L^{-1}$), and 1 mL of activated sludge from a MBBR reactor who had been previously fed with the raw MLL for 4 months, completed with 11 mL concentrate solutions of perchlorate to obtain respective concentrations in perchlorate of 5 and 35 mg $L^{-1}$ in the final 164 mL liquid volume.

1.10 Mature landfill leachate treatment in an anodic oxidation flow reactor

AO landfill leachate pre-treatment was followed through measurement of TOC, COD, pH, conductivity ($\mu S\ cm^{-1}$), turbidity. The dynamics of chloride, chlorate, perchlorate, nitrite, nitrate, ammonium, and FA concentrations were also followed during the 30 hours experiment. The experiments were performed in grid electrode configuration with a $Q_l$ of 10.8 L $h^{-1}$ and a current intensity of 4 A ($j_{app}$ = 6.21 mA $cm^{-2}$). This process operated exclusively in a 100% recirculation mode, wherein the liquid from the outlet of the MAOFR was directed to a 7.2 L CSTR and then recirculated back to the inlet of the MAOFR. Samples were collected at the outlet of the MAOFR.

$BOD_u$ analyses were performed according to respirometric method from (Rodier, 2009) in the range 0 - 4000 $mgO_2$ $L^{-1}$ for 60 days. An OxiTop® control system (WTW, Germany) was used as automated system for $BOD_u$ measurement. Each OxiTop® bottle had a working volume of 432 mL and contained 20.7 mL of raw leachate or pretreated leachate, 1 mL of Allylthiourea ($C_4H_8N_2S$) (1 g $L^{-1}$) (to prevent nitrification) and 1 mL of activated sludge from a MBBR reactor who had been previously fed with the pre-treated MLL for 5 weeks. A rubber sleeve with 6 sodium hydroxide pellets was placed inside each bottle to absorb the carbon dioxide produced during the bacterial activity. The continuously stirred bottles were incubated in a dark place at $20 \pm 1$ °C. Each batch of analysis also included one blank. The blank control bottle was filled with osmosed water instead of the leachate, to evaluate the microbial endogenous respiration, which was subtracted from the final $BOD_u$ measurements. $BOD_u$ analyses were made in duplicates. The ratio between the BOD and the COD was plotted for evaluating the biodegradability of the different samples. The higher the ratio, the higher the biodegradability was.

BOD analyses with increasing perchlorate concentrations have been performed following a similar procedure as previously explained in the last section. For these measurements, the range was 0 - 400 $mgO_2$ $L^{-1}$, the BOD test solutions were composed of: 141.6 mL of a mixture of carboxylic acids: oxalic acid (625 mg $L^{-1}$), maleic acid (137 mg $L^{-1}$), glyoxylic acid (261 mg $L^{-1}$), and formic acid oxalic acid (321 mg $L^{-1}$); 10 mL of a buffer solution: $KH_2PO_4$ (8.6 g $L^{-1}$), $K_2HPO_4$ (21.75 g $L^{-1}$), $(Na_2HPO_4,2H_2O)$ (33.4 g $L^{-1}$), $NH_4Cl$ (1.7 g $L^{-1}$); 0.4 mL of Allylthiourea ($C_4H_8N_2S$) (1 g $L^{-1}$), and 1 mL of activated sludge from a MBBR reactor who had been previously fed with the raw MLL for 4 months, completed with 11 mL concentrate solutions of perchlorate to obtain respective concentrations in perchlorate of 5 and 35 mg $L^{-1}$ in the final 164 mL liquid volume.

## 2. Results

2.1 Comparison of grid and plate electrodes in a modular anodic oxidation flow reactor : hydrodynamics and mass transport.

2.1.1 Hydrodynamics

Influence of current density and reactor configuration on RTD curves

Influence of the value of the current density was then studied by comparing RTD curves obtained for the same $Q_l$ and different current densities (2.4 $vs$ 6.4 mA $cm^{-2}$) (not shown). The curve obtained at 2.4 mA $cm^{-2}$ presented similar mean residence time but slightly higher variance and skewness factor ($\sigma^2$ = 0.10 and $\gamma$ = 1.60) than with 6.4 mA $cm^{-2}$ ($\sigma^2$ = 0.08 and $\gamma$ = 1.21). These values indicated the presence of few more recirculations or diffusive dead zones with an applied current of 2.4 mA $cm^{-2}$. This trend might be ascribed to the increase of formation of bubbles at the electrode surface at higher current, thus contributing to the increase of the overall liquid mixing within the reactor (e.g., the maximum produced gas flow rate was around 0.046 L $min^{-1}$ at 4 A and 0.017 mL $min^{-1}$ at 1.5 A). However, the difference of hydrodynamic behavior was low between these two current densities, thus highlighting that low current density (2.4 mA cm$^{-2}$) was already sufficient to limit recirculation phenomena.

Influence of reactor configuration on RTD curves

The influence of reactor configuration (grid vs plate electrodes) was studied by comparing RTD curves obtained with the same operating conditions. First, a different behavior was obtained between plate and grid electrodes when comparing the results with a condition without neither aeration nor electrode polarization in galvanostatic mode (not shown). However, as for plate electrodes, polarization of grid electrodes strongly reduced the recirculation phenomena. RTD curves obtained with a current density of 6.4 mA cm$^{-2}$ and a $Q_l$ of 10.8 L h$^{-1}$ are compared. There was not any significant difference between the configurations with plate or grid electrodes, despite the strong difference in terms of liquid circulation inside the MAOFR. This trend was also confirmed for a $Q_l$ of 18 L h$^{-1}$. These results indicated that gas evolution at electrode surfaces was the main factor governing the global hydrodynamic of the reactor. However, RTD curves were not a sufficient tool for a complete understanding of the specificities related to the two electrodes configurations, particularly about local mass transport phenomena at the vicinity of the surface of electrodes.

RTD curves modelling

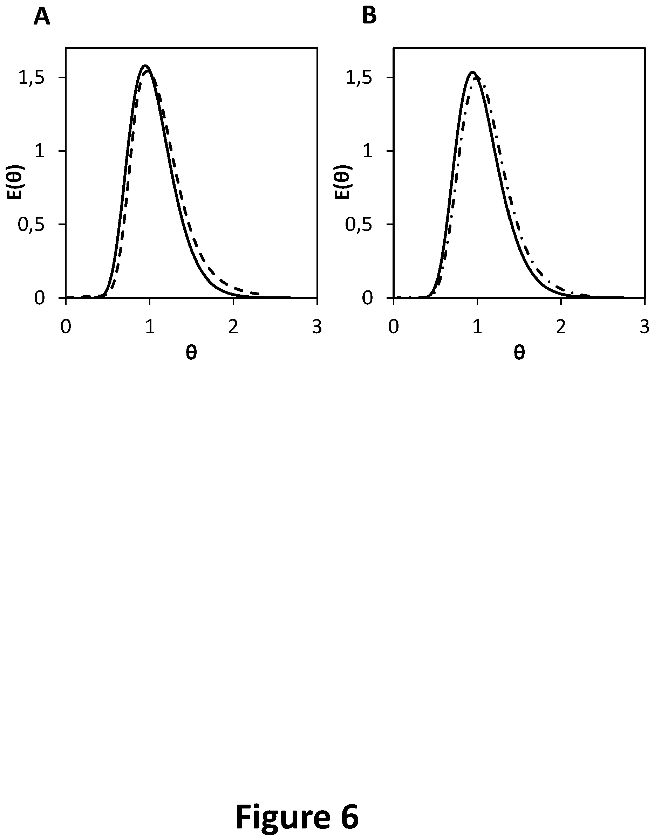

A dispersive-diffusive model presented in section 1.6 was used for describing experimental RTD curves ($\overline{t_s}$ (min) =6.55 +/- 0.10 ; $\sigma^2$ = 0.12 +/- 0.01, $\gamma$ =1.60 +/- 0.22, $I$ = 4A). The key fitting model parameter was the dispersion coefficient (D). For both configurations, for a $Q_l$ of 10.8 L h$^{-1}$, Dwas set to 23.3 mm$^2$ s$^{-1}$. The ME and IOA parameters were calculated and highlighted a high correlation between model and experimental data for both electrode configurations: ME$_{plate}$ = 0.968, IOA$_{plate}$ = 0.992, ME$_{grid}$ = 0.964 and IOA$_{grid}$ = 0.991 (Figures 6A and 6B).

2.1.2 Mass transport at the vicinity of the surface of electrodes

*Influence of flow rate on mass transport coefficient using the limiting current method with ferri-ferrocyanide*

Mass transport at the local scale of electrode surface was studied by measurement of mass transport coefficients ($k_m$) using the limiting current technique for oxidation of [Fe(CN)$_6$]$^{4-}$ as described in *section 1.4*.

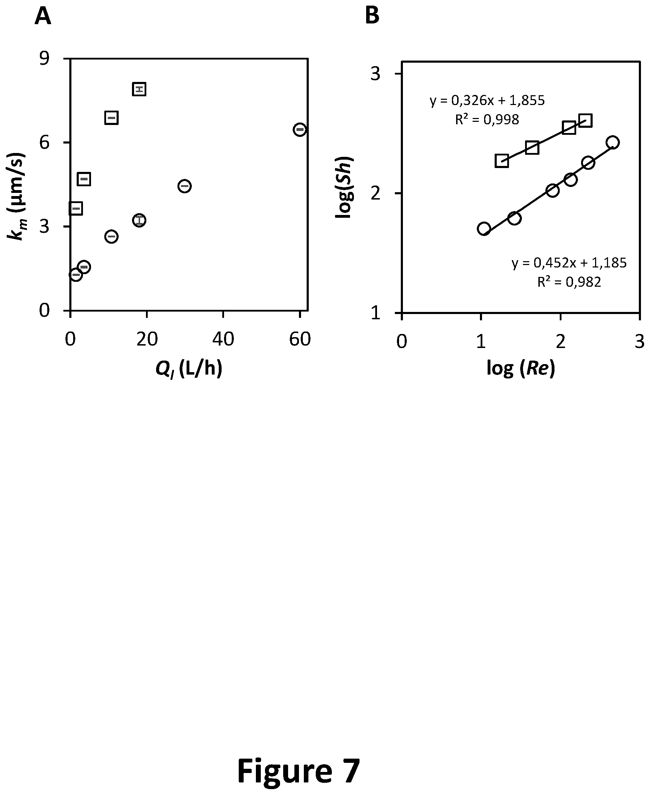

Figure 7A reveals that an increase in the $Q_l$ significantly improved the value of $k_m$. For instance, for plate electrodes, $k_m$ increased from 1.28 $\mu$m s$^{-1}$ to 6.46 $\mu$m s$^{-1}$ when $Q_l$ increased from 1.5 L h$^{-1}$ to 60 L h$^{-1}$. This trend was observed for both configurations and was ascribed to the increase of the liquid velocity at electrodes vicinity. Besides, for a given $Q_l$, the value of $k_m$ was 2 to 3 times higher in the configuration with grid electrodes compared to plate electrodes (e.g., for $Q_l$ = 10.8 L h-', $k_{m, grid}$ = 6.9 $\mu$m s$^{-1}$ and $k_{m, plate}$ = 2.6 $\mu$m s$^{-1}$). This difference was directly related to the way the liquid flowed at the vicinity of the electrodes surface. With grid electrodes, the liquid flowed through the grid structure of the electrodes, while the liquid flowed by the surface of plate electrodes. For a given flow rate, the liquid mean velocity (ii) was similar for both configurations (e.g., for $Q_l$ = 10.8 L h$^{-1}$, $\overline{u}_{grid}$ = 3.7 mm s$^{-1}$ and $\overline{u}_{plate}$ = 3.0 mm s$^{-1}$). However, the velocity profile strongly differed at the vicinity of the surface of electrodes. The maximum liquid velocity was obtained at the middle of the holes with grid electrodes (i.e., $\approx$ 1.5 mm from electrode surface), while the maximum liquid velocity was obtained at the middle of the interelectrode gap (i.e., $\approx$ 9.3 mm away from electrode surface) for plate electrodes operated with parallel flow.

Therefore, using grid allowed for improving the velocity profile at the vicinity of electrode surface, thus improving mass transport phenomenon from the bulk to the electrode surface.

Mass transport phenomenon to the electrode surface was then further characterized by a correlation between dimensionless numbers that has been widely used in the literature (Cañizares et al. 2006).The theoretical Sherwood number was expressed according to Reynolds *(Re)* and Schmidt numbers ($Sc = v/D_i$) (Eq. 14):

$$Sh = a\,Re^b\,Sc^{1/3} \tag{14}$$

The values of a and b were obtained from the linear correlation between log($Sh$) and log($Re$) (Eq. 15). Linear correlations obtained for both electrode configurations are shown in Figure 7B.

$$\log(Sh) = b\log(Re) + \log(a) + \frac{1}{3}\log(Sc) \tag{15}$$

Sherwood and Reynolds numbers were defined using the equivalent diameter of the flow channel ($d_e$), which is

defined slightly differently in the two electrode configurations due to the different flow paths (Eqs. 16, 17 and 18).

$$Sh = \frac{k_m\, d_e}{D_i} \qquad (16)$$

$$Re = \frac{\overline{u} * d_e}{v} \qquad (17)$$

$$d_e = \begin{cases} \frac{2\, d_{inter}\, h}{d_{inter}+h} & \text{for plate electrode configuration} \\ \frac{2\, l\, h\, \varepsilon}{l+h} & \text{for grid electrode configuration} \end{cases} \qquad (18)$$

where $k_m$ is the mass transport coefficient (m s$^{-1}$), $D_i$ the diffusion coefficient, $\overline{u}$ the liquid mean velocity (m s$^{-1}$), $v$ the cinematic viscosity (m$^2$ s$^{-1}$), $h$ the height of immerged electrode (m), $d_{inter}$ the interelectrode gap (m), l the length of the electrode and $\varepsilon$ the percentage of void in the grid electrode.

The resulting correlations are presented below for plate electrode configuration (Eq. 19), and for grid electrode configuration (Eq. 20):

$$Sh = 1.34\ Re^{0.45}\ Sc^{1/3} \qquad (19)$$

$$Sh = 6.24\ Re^{0.33}\ Sc^{1/3} \qquad (20)$$

The values of a and b coefficients are related to the design of the reactor. The larger value of a obtained with grid electrodes indicated that dimensions and shape of these materials enhanced the mass transport of target compounds from the bulk to the electrode surface. The higher value of b obtained with plate electrodes indicated that the increase of the Reynolds number (i.e., higher flow rate) had a stronger impact on the increase of the mass transport to the electrode surface. Similar trends in terms of values of a and b were obtained with a higher value of a obtained with grid electrodes compared to plates (Huang et al., 2021).

It is important to notice that the limiting current technique was based on measurements obtained in the potential region of water stability, meaning that HER and OER did not occur. However, as discussed in the previous section, gas evolution at the surface of electrodes might strongly influence mass transport conditions.

*Influence of hydrogen and oxygen evolution reactions on mass transport coefficient*

To better understand the influence of HER and OER on the mass transport coefficient, a model was developed. The model was built from the combination of the dispersive-diffusive model with the AO rate for COD removal, as described in section 1.6. This approach allowed for calibrating the model based on fitting $k_m$ values from the experimental mineralization kinetics of a target compound (phenol). For comparison purposes, $k_m$ values obtained with ferrocyanide have been redefined thanks to Eq. 21 for phenol molecule (Winkelmann, 2018).

$$k_{m,\ phenol} = k_{m,\ ferrocyanide} \left(\frac{D_{phenol}}{D_{ferrocyanide}}\right)^{2/3} \qquad (21)$$

with $D_{ferrocyanide} = 6.62 \times 10^{-10}$ m$^2$ s$^{-1}$ and $D_{phenol} = 8.83 \times 10^{-10}$ m$^2$ s$^{-1}$

The evaluation of $k_m$ values with this method required the use of an inert electrolyte (NaNOs) to avoid possible mediated oxidation processes that may occur during AO in the presence of electro-active species.

When using NaNOs as supporting electrolyte, faster COD removal was obtained with grid electrodes compared to plates (Figure 8A). The kinetic for COD removal was 0.62 h$^{-1}$ with grid electrodes and 0.35 h$^{-1}$ with plate electrodes. In this case, compared to data obtained from the limiting current technique, the value of $k_m$ obtained from the model of COD removal was 1.4 times lower for grid electrodes, while it was 1.33 times higher for plates (Table 6). Such differences indicated that another phenomenon might participate in the control of mass transport near the electrode surface.

Table 6 : Values of $k_m$ obtained with different methods and using different supporting electrolytes.

| Parameter | limiting current method with ferrocyanide* ($Q_l$ =10.8 L h$^{-1}$) | modelling method with phenol and nitrate ($Q_l$ =10.8 L h$^{-1}$) | modelling method with phenol and nitrate ($Q_l$ =32.4 L h$^{-1}$) |
|---|---|---|---|
| $k_m$ (μm s$^{-1}$) plate | 3.13 | 4.17 | X |
| $k_m$ (μm s$^{-1}$) grid | 8.16 | 5.83 | 7.50 |

*For comparison, values of $k_m$ obtained with the limiting current method using ferrocyanide have been redefined thanks to Eq. 21 for phenol molecule.

Indeed, a crucial difference between experiments performed for determination of the limiting current and for phenol AO was related to the occurrence of OER and HER in the latter case. In fact, the AO process requires the application of potentials in the region of overpotential of water oxidation for formation of ·OH. OER at the anode surface might participate in (i) micro-turbulence enhancement near the anode surface during bubble detachment, with a positive effect on mass transport of organic compounds to the anode surface, (ii) decreasing the effective active surface area of the electrode because of bubble adhesion, with an adverse effect on mass transport. In the case of plate electrodes, the liquid velocity profile involved low micro-turbulences near the anode and strongly limited mass transport phenomenon. Therefore, micro-turbulence enhancement from OER was able to improve mass transport (higher $k_m$) despite the adverse effect from bubble adhesion. On the opposite, the liquid velocity profile was more favorable with grid electrodes. Therefore, micro-turbulence enhancement from OER was less significant since the flow rate might still control convection in the vicinity of electrode surface. Thus, the decrease of the value of $k_m$ was ascribed to the adverse effect from bubble adhesion that was the predominant phenomenon. This trend was further confirmed by results obtained at higher $Q_l$ (Figure 8B). Using the same operating conditions (NaNOs as electrolyte and $I$ = 4 A), the increase of the $Q_l$ from 10.8 L h$^{-1}$ to 32.4 L h$^{-1}$ with grid electrodes improved the kinetic for COD removal (from 0.67 h$^{-1}$ to 0.84 h$^{-1}$) thus resulting in an increase of $k_m$ = 7.5 μm s$^{-1}$ (Table 6). Overall, these results indicated that micro-turbulences from OER might control mass transport when experimental conditions ($Q_l$) involved low convection in the vicinity of electrode surface. On the contrary, the liquid flow rate might still control mass transport when it provides a sufficiently high liquid velocity in the vicinity of electrode surface.

The influence of bubbles formation in the vicinity of the anode was further studied using optical zoom images (not shown). Pictures revealed that bubbles produced on the anode surface created an upward flow that was similar on both sides of plate anodes, while bubbles were mainly observed at the downstream side of grid anodes. Bubbles produced at the upstream side of grids were swept away by the horizontal liquid flow. These observations indicated that the upward flow of bubbles might be the controlling phenomenon for convection in the vicinity of plate electrodes, while the horizontal liquid flow through grid electrodes was controlling convection in the case of grids.

The upper limit of $O_2$ gas formation at both sides of one anode was estimated as 1.13 mL min$^{-1}$ and was the same for both grids and plates. However, it appeared that bubbles produced at plate electrodes were larger (diameter = 110 μm) and had a much higher velocity (84 mm s$^{-1}$) than the ones produced at grid electrodes (diameter = 12 μm, velocity = 6.7 mm s$^{-1}$). The lower size of these bubbles might be related to the higher liquid velocity in the vicinity of electrode surface, which promotes detachment of small bubbles by providing an additional force to Archimedes buoyant force for overcoming adhesion energy. For example, a recent study also reported a strong decrease in size of bubbles formed at a Ni grid when

$$Re_g = \frac{\overline{u} * r_b}{\nu}$$

increasing the flow rate through the grid structure. The Reynolds numbers associated to bubble rising ( with $r_b$ the radius of the bubbles (m)) were 9.2 and 0.08 for plate and grid electrodes, respectively. Therefore, bubbles generated on plate electrodes may promote further liquid micro-turbulences, thereby enhancing mass transport of pollutants to the anode surface area. This hypothesis might be modulated by the different number of bubbles produced in both configurations : smaller frequency of bubbles with a higher $Re_g$ (plate electrodes configuration), and higher frequency of bubbles with a lower $Re_g$ (grid electrodes configuration).

When using low $Q_l$ in the configuration with plate electrodes, micro-turbulences associated to bubbles might control liquid convection in the vicinity of electrodes. On the opposite, when using high $Q_l$ and/or configuration with grids, the $Q_l$ and the related liquid velocity profile might become the main parameter. Besides, in all cases, adhesion of bubbles at the electrode surface has an adverse effect on mass transport because of the decrease of the effective electro-active surface area. Further investigations would be required for quantification of this adverse effect according to operating conditions.

The results obtained in this study show the benefit obtained from the use of grid electrodes (compared to plate) for improving local mass transport at the vicinity of the electrode surface. In view of industrial application, it is important to highlight that the shape of the electrode would play a major role on such benefit. For example, increasing too much (e.g. 100% higher) the values of the long way of grid and/or nominal short way of grid, and/or void percent would significantly decrease the fluid velocity at the vicinity of the electrode surface, thus hampering mass transport to the electrode surface. Moreover, it would decrease the active surface of electrode. On the opposite, decreasing too much (e.g. 100% lower) these values might raise some issues of electrode fouling related to the treatment of real effluent containing particulate matter that may accumulate at the electrode surface.

2.1.3 hydrodynamics and mass transport: conclusion

It is important to carry out hydrodynamic and mass transport measurements under representative conditions of the intended application (i.e., in presence of gas evolution when operation of the process in the potential region of water oxidation is required).

Bubbles generated from OER and HER played an important role in promoting micro-turbulences near the surface of electrodes improving hydrodynamics of the reactor, particularly when it was operated at low $Q_l$. The RTDs obtained with the polarized electrodes condition were close to the ones with aerated condition. Similar results were obtained when comparing plate and grid electrodes configuration in the polarized electrodes condition.

Gas evolution leads to two behaviors (micro-turbulence enhancement near the electrode surface / decrease of the electro-active surface area) that impact mass transport at different degrees depending on reactor configuration and operating conditions (liquid flow rate). For plate electrodes with low fluid velocity at electrode surface, an increase of $k_m$ was overall obtained. For grid electrodes with higher fluid velocity at electrode surface, a decrease of $k_m$ was overall obtained.

Results obtained in different electrolytes showed that mediated oxidation by in situ generated oxidant species with longer lifetime (e.g., sulfate radicals) might extend the reaction zone away from the electrode surface and increase the observed mass transport coefficient.

The model allows the prediction of process performances and can help to size an industrial process (according to the volume to be treated, concentration in the feed, target objective of COD removal, operating conditions).

2.2 Comparison of configurations with grid or plate electrodes for the treatment of a synthetic concentrated effluent.

2.2.1 Influence of reactor configuration on degradation and mineralization of phenol

Degradation and mineralization of phenol were evaluated in the reactor operated with 100% recirculation using either plate or grid electrodes (Figure 9). The limiting current density for mineralization of phenol was calculated using the values of the observed mass transport coefficient ($k_{m,obs}$) obtained in the previous section with the exact same configuration (including the use of 50 mM of $Na_2SO_4$ as supporting electrolyte). This value is defined as an observed mass transport coefficient since it was also influenced by mediated oxidation phenomena that may happen in a reaction zone that is not strictly restricted to the anode surface (e.g., formation of sulfate radicals with longer lifetime than $^{\bullet}OH$). Therefore, it is not a parameter that represents only the mass transport of target compounds from the bulk to the electrode surface. Evolution of the limiting current density for mineralization of phenol was analysed for plate and grid electrodes. Similar trends were obtained since similar values of $k_{m,obs}$ were previously measured with both configurations (not shown).

Non-significant difference in terms of mineralization rate with grid or plate electrodes was observed at high initial concentration of phenol ([phenol]$_0$ = 325 mg L$^{-1}$) (Figure 9). The process was initially operated under strict current limitation ($j_{app} < j_{lim}$) for the first 1 to 2 hours, according to the calculated values of the limiting current density. Then, a limitation from mass transport might occur during the rest of the experiment ($j_{app} > j_{lim}$)(not shown). Therefore, similar mineralization trends were ascribed to (i) the application of the same current intensity (4 A), resulting in similar mineralization yield as regards to the current limitation and (ii) the identical values of $k_{m,obs}$ obtained for both configuration for mineralization of phenol in such conditions, as regards to the limitation from mass transport, (iii) the similar RTD curves obtained in both configurations (previous section).

Overall, operation of the process using a current density close to the limiting current density for phenol mineralization allowed for (i) maximizing the productivity of the process (requiring sufficiently high current), and (ii) avoiding strong mass transport limitation (requiring the application of a current below or close to the limiting current density) that would decrease current efficiency.

Besides, it is interesting to point out that significant difference was observed in terms of phenol degradation kinetics (Figure. 9B). It might be ascribed to (i) a limitation from mass transport or (ii) progressive increase in competition phenomena with degradation by-products, which would hinder degradation of phenol. For mineralization of phenol, the participation of the current to reactions with phenol and with all degradation by-products until conversion to $CO_2$ is considered (e.g., it is considered that the number of electrons exchanged for mineralization of phenol to $CO_2$ is 28, corresponding to 4.67 mol of electrons per mol of carbon from phenol) (Eq. 22). For phenol degradation, only the first step of oxidation is considered (only one electron exchanged for conversion of phenol into the first by-products). The maximum fraction of current that can be used for the degradation of phenol ($j_{lim,phenol}$) is therefore much smaller compared to that of its mineralization ($j_{lim,TOC}$) (not shown). Therefore, the degradation of phenol might occur under mass transport limitation, despite the absence of mass transport limitation for phenol mineralization.

$$C_6H_6O + 11 H_2O \rightarrow 6 CO_2 + 28 H+ + 28 e- \quad\quad (22)$$

It is important to notice that the degradation kinetic parameter was 1.8 times higher with grid electrodes ($0.46\ h^{-1}$) than with plate electrodes ($0.26\ h^{-1}$) (not shown). Such a difference might be ascribed to different mass transport conditions. In addition to the determination of $k_{m,obs}$, mass transport conditions were also previously assessed by monitoring mineralization kinetics of phenol with an inert electrolyte (NaNOs, noted as $k_{m,NaNO_3}$), for avoiding the influence of mediated oxidation with sulfate radicals that was observed with $Na_2SO_4$ electrolyte. From this method, mass transport coefficient was determined as 1.4 times higher (for $k_{m,NaNO_3}$) with grid electrodes than with plate electrodes. These results seem to indicate that degradation kinetics are further correlated with these parameters that strictly represents the transport of target compounds from the bulk to the electrode surface where $^{\bullet}OH$ are accumulated. It is consistent with the preferential degradation of phenol through reaction with $^{\bullet}OH$ ($k^{\bullet}_{OH} = 1.4\ 10^{10}\ s^{-1}\ M^{-1}$), compared to reaction with sulfate radicals ($k^{\bullet}_{SO4} = 8.8\ 10^9\ s^{-1}\ M^{-1}$). Indeed, these values show that reaction at the anode surface with $^{\bullet}OH$ might be a key phenomenon compared to reaction with sulfate radicals in a wider reaction zone.

2.2.2 Influence of reactor configuration on formation of degradation by-products of phenol

Figure 10 shows the evolution of concentrations of different phenol degradation by-products, including aromatic by-products (catechol (CT), para-benzoquinone (pBQ), and hydroquinone (HQ)) (Figure 10A) and short-chain carboxylic acids (oxalic, maleic, glyoxylic, formic and fumaric) (Figure 10B). The total concentration of degradation by-products was also calculated from the mass balance between TOC and phenol concentrations. The maximum concentrations of degradation by-products were reached at similar treatment time for both configurations, but results were significantly different in terms of quantity of by-products accumulated in the solution. For example, the concentration of aromatic by-products that were analyzed was 5 times higher after 0.5 hours of treatment with grid electrodes ($57.3\ mgC\ L^{-1}$) than with plate electrodes ($11.5\ mgC\ L^{-1}$). As another example, the maximum concentration of carboxylic acids that were analyzed (reached at 6 hours of treatment) was 1.6 times higher using grid electrodes ($40.4\ mgC\ L^{-1}$) instead of plates ($24.6\ mgC\ L^{-1}$). Overall, the total maximum concentration of by-products was obtained after 4 hours of treatment with a concentration that was 2.0 times higher with grid electrodes ($118\ mgC\ L^{-1}$) than with plate electrodes ($59\ mgC\ L^{-1}$) (Figure 10C). The higher concentration of by-products obtained with grid electrodes can be directly correlated with the faster degradation kinetics and similar mineralization rate that were previously observed. By considering the film theory, the more favorable mass transport conditions correspond to a decrease in thickness of the diffusion layer at the electrode surface, which might promote back-diffusion of degradation by-products generated at the anode surface instead of direct combustion to $CO_2$ through a rapid succession of reactions at the anode surface.

The evolution of the concentration of by-products depends on both their formation and their destruction rate. The maximum concentration of these aromatic by-products was rapidly reached since they are formed from the first oxidation steps of the phenol molecule (Eqs. 23, 24, and 25) (Mousset et al., 2016). Therefore, their formation rate rapidly decreased with the decrease in phenol concentration (e.g., 34% and 62% removal of phenol at 0.5 and 2 hours of treatment with grid electrodes). On the contrary, short-chain carboxylic acids are formed during the last steps of oxidation, just before the final conversion to $CO_2$. Their formation requires several previous oxidation steps. Therefore, the maximum concentration was reached much later during treatment (at t = 6 h), when 93% of the initial concentration of phenol was already degraded with grid electrodes. This treatment times corresponded to a phenol mineralization yield of 52%. It is also interesting to notice that the maximum total concentration of by-products was reached when the degradation and mineralization yields of the initial phenol molecule was 83% and 35%, respectively (with grid electrodes).

$$PH + {}^{\bullet}HO + O_2 \rightarrow CT + {}^{\bullet}HO_2 \quad\quad (23)$$

$$PH + {}^{\bullet}HO + O_2 \rightarrow HQ + {}^{\bullet}HO_2 \quad\quad (24)$$

$$HQ + 2\ {}^{\bullet}HO + O_2 \rightarrow pBQ + 2\ H_2O \quad\quad (25)$$

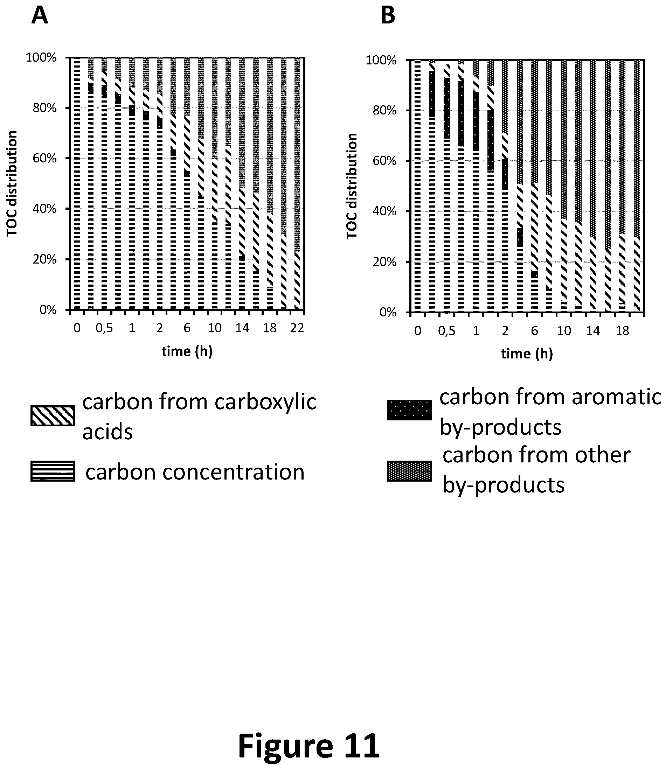

Figure 11 shows the distribution of carbon concentration between (i) carbon from the initial phenol molecule, (ii) carbon from aromatic by-products that were analyzed, (iii) carbon from carboxylic acids that were analyzed, and (iv) carbon from other by-products (data obtained from a mass balance). These data highlight that degradation by-products might represent an important fraction of the residual TOC, particularly in the case of grid electrodes. For instance, at t = 6 h, the sum of all by-products represented 86 % of the total carbon in the solution including carboxylic acids accounting for 35 % of the total carbon.

2.2.3 Influence of reactor configuration on the formation of toxic chlorinated by-products

The formation of toxic chlorinated compounds represents an important issue for the AO process since chloride ions are widely present in most wastewaters. Therefore, the formation of chlorate and perchlorate ions was assessed in the same operating conditions as the previous experiment. The only differences were the use of 16 mM NaCl instead of 50 mM $Na_2SO_4$ as supporting electrolyte and the absence of phenol.

Figure 12 highlights the significantly higher formation of chlorates and perchlorates with plate electrodes compared to the grid electrodes configuration at same treatment time. Indeed, after 10 hours of treatment at 6.3 $\pm$ 0.1 mA cm$^{-2}$ with a $Q_l$ of 10.8 L h$^{-1}$, 90% of initial chlorine (566 mgCl L$^{-1}$) was converted, leading to a concentration of 330 mgCl L$^{-1}$ of chlorate and 138 mgCl L$^{-1}$ of perchlorate with plate electrodes. In comparison, only 45% of initial chlorine (558 mgCl L$^{-1}$) was converted, leading to a concentration of 219 mgCl L$^{-1}$ of chlorate and 66 mgCl L$^{-1}$ of perchlorate with grid electrodes.

Therefore, these results are not consistent with the more favorable mass transport conditions of chloride ions to the electrode surface that occur with grid electrodes.

For explaining such behavior, it is first possible to calculate the initial value of the limiting current for conversion of chloride ions to perchlorate. The values were 8 and 11 mA cm$^{-2}$ for plate and grid electrode configuration respectively when considering $k_{m,chloride,NaNO_3}$ as relevant mass transport coefficient for this reaction. As $j_{lim} > j_{app}$ (6.2 mA cm$^{-2}$ for plates and 6.4 mA cm$^{-2}$ for grids) perchlorate formation was not strongly limited by mass transport of chloride ions to the electrode surface, at least during the first hours of treatment. Then, the difference observed between the two configurations could come from different reaction phenomena at the electrode surface. Particularly, the competition of chloride oxidation with OER might be discussed. it was observed in the art that an increase in convection through a porous anode promoted OER. It was ascribed to an increase of the sweeping of $O_2$ gas bubbles from the electrode surface. This phenomenon resulted in a decrease of degradation and mineralization rates of target organic compounds when operating porous electrodes at high filtration fluxes (Trellu et al., 2018). At this point, it is possible to draw a parallel with previous results discussed in section 1, when it was highlighted that the configuration with grid electrodes led to the formation of smaller bubbles compared to plate electrodes. It was also ascribed to an increase of the sweeping of gas bubbles from the electrode surface when using grid electrodes in flow-through configuration. Consequently, the use of grid electrodes may promote OER compared to the configuration with plate electrodes. This enhanced competition phenomenon might result in decreasing the conversion of chloride into chlorate and perchlorate since a greater fraction of the current would be allocated to the OER.

Such increase of competition with the OER can also be quantitatively related to the lower Faraday efficiency for chlorate and perchlorate formation with grid electrodes compared to the plates (not shown).

As regards to the Faraday efficiency for perchlorate formation, a continuous increase over time was observed. It was related to the progressive accumulation of chlorate in the solution, which favors perchlorate formation. Besides, it is interesting to notice that, for plates, the Faraday efficiency for chlorate formation had a decreasing trend with time, while for grids, an increasing trend was observed. With plate electrodes, the decrease of the Faraday efficiency might be ascribed to the faster decrease of the amount of chloride ions in the solution that leads to a reduction, with time, of the formation of active chlorine and subsequent oxychlorinated species. With grid electrodes, the increasing trend with time might be due to a limitation related to a slower accumulation of active chlorine at the beginning of the treatment (which are the intermediate species between chloride ions and chlorate) because of the stronger competition with OER.

The more favorable mass transport conditions observed with grid electrodes might play a more important role during the treatment of solutions with lower concentrations of chloride ions.

2.2.4 Conclusions

Overall, results highlighted that the configuration with grid electrodes improved the degradation kinetics of phenol and increased the formation of degradation by-products, including short-chain carboxylic acids. This configuration was also able to reduce the formation of chlorate and perchlorate compared to the configuration with plate electrodes.

Grid electrode configuration favored the first step of degradation of phenol owing to the most suitable conditions for mass transport of initial phenol from the bulk to the electrode surface. It has resulted in a higher accumulation of degradation by-products than with the configuration with plate electrodes, for which the decrease of degradation kinetics and promotion of complete combustion of phenol to CO2 led to a lower accumulation of degradation by-products.

The different local hydrodynamic conditions with grid electrodes also allowed for reducing the formation of chlorate and perchlorate.

These two conclusions allowed for selecting grid electrodes as the preferential configuration for electro-oxidation pre-treatment with an AO process prior to a biological treatment.

2.4 Application of the configuration with grid electrodes for treatment of a mature landfill leachate.

The results refer to a MLL AO pre-treatment of a MLL of exemplary compsition as described in table 7 below.

Table 7

| Parameter | Level in MLL |
|---|---|
| pH | 8.4 |
| Conductivity (mS cm$^{-1}$) | 25 |
| Turbidity (NTU) | 25 |
| BODu (gO$_2$ L$^{-1}$) | 0.17 |
| COD (gO$_2$ L$^{-1}$) | 4.2 |
| BOD$_5$/COD | 0.02 |
| BODu/COD | 0.04 |
| particulate COD (gO$_2$ L$^{-1}$) | 0.05 |
| TC (mgC L$^{-1}$) | 3700 |
| TOC (mgC L$^{-1}$) | 1500 |
| TN (mgN L$^{-1}$) | 2900 |
| Ammonium (mgN L$^{-1}$) | 1600 |
| Nitrate (mgN L$^{-1}$) | 4.5 |
| Nitrite (mgN L$^{-1}$) | 3.87 |
| Chloride (mgCl L$^{-1}$) | 3000 |
| Phosphorus (mg L$^{-1}$) | 17.46 |
| Aluminium (mg L$^{-1}$) | 0.632 |
| Calcium (mg L$^{-1}$) | 25.69 |
| Potassium (mg L$^{-1}$) | X |
| Magnesium (mg L$^{-1}$) | 35 |
| Silicon (mg L$^{-1}$) | 15.43 |
| Sodium (mg L$^{-1}$) | X |
| Manganese (mg L$^{-1}$) | 0 |
| Iron (mg L$^{-1}$) | 2.62 |
| Chromium (mg L$^{-1}$) | 0.43 |
| Strontium (mg L$^{-1}$) | 1.48 |
| Arsenic (mg L$^{-1}$) | 0.618 |
| X : not measured | |

2.4.1 Evolution of global parameters

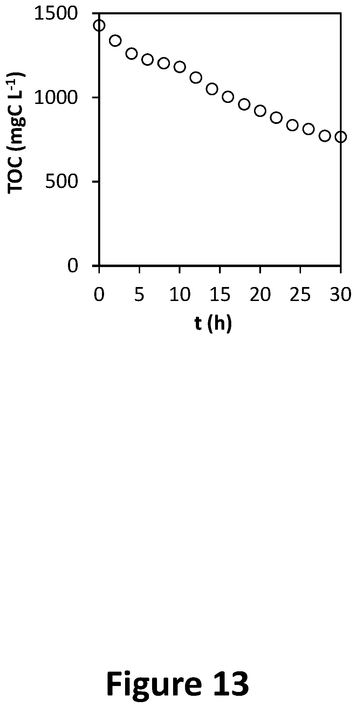

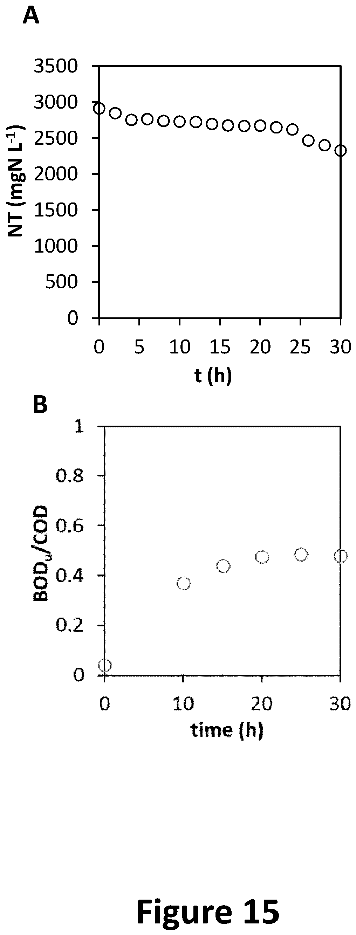

The mineralization of organic compounds was performed under current limitation. Figure 13 shows the evolution of dissolved TOC in the MLL during the AO pre-treatment. The decrease of the TOC follows a pseudo-zero order kinetic, which is consistent with the high concentration of organic compounds. After 10, 20 and 30 hours of treatment, the TOC removal yield was 17.3, 35.5 and 46.4%, respectively. Figure 15A shows the evolution of TN during the same treatment. Compared to the trend obtained for TOC, the decrease of TN was significantly slower.

2.4.2 Fluorescence evolution through electrolysis time

3DEEM analyses were performed during the first 12 hours of the AO pre-treatment. It was observed the global fluorescence measured had significantly decreased after 12 hours of AO pre-treatment. When examining the dynamics of the fluorescence zones linked to various nature of organic compounds (Table 5 section 1.9), it is interesting to notice that significant variations were observed.

For instance, the fluorescence associated with the presence of aromatics or proteins-like compounds associated to zones I and II (Table 5 section 1.9) disappeared the most rapidly (not shown). Indeed, compounds with an aromatic structure appear to react quickly with ·OH and active chlorine (Maghsoodi et al., 2019). Moreover, the kinetics of fluorescence elimination were slightly lower for zones III and IV, which are associated to fulvic-like substances and soluble microbial products. The difference was even the most significant for zone V (not shown), which is associated to humic-like substances (Table 5 section 1.9). Such trend might be due to the specific structure of this kind of molecules that decreases kinetics for conversion into non-fluorophores by-products. It might also be due to the lower diffusion coefficients of these large molecules ($1.9$-$2.5 \ 10^{-10} \ m^2 \ s^{-1}$ for humic substances ). It might result in a decrease of oxidation kinetics at the anode surface, compared to other compounds with higher coefficient diffusions (e.g., $3 \ 10^{-9} \ m^2 \ s^{-1}$ for L-tyrosine, which is considered as a model compound associated to zones I and II). However, after 12 hours, about 90% of the fluorescence disappeared, signifying that almost all the fluorophores were converted into degradation by-products (figure 14B). This conversion of fluorophores might be an indicator of an increase of the biodegradability of the effluent. In fact, it indicates that initial complex molecules with low biodegradability were transformed into by-products that may have higher biodegradability .

2.4.3 Selection of the optimal configuration and anodic oxidation pre-treatment parameters choice for coupling with biological treatment

The main objective when considering the coupling of an AO pre-treatment with a biological treatment might be (i) the fast conversion of initial molecules and accumulation of biodegradable by-products such as short-chain carboxylic, and (ii) the minimization of production of chlorate and perchlorate. Based on the results presented in previously, the configuration with grid electrodes was therefore selected instead of the configuration with plates.

In addition, as shown above, it has been found the maximum concentration of phenol degradation by-products was obtained when reaching around 40% of phenol mineralization. Therefore, this value of 40% of mineralization was initially selected as a target for the AO pre-treatment of MLL in the hope of maximizing similar by-products accumulation.

To confirm this pre-selected mineralization target value, complementary analyses were conducted. The dynamic of the BODu/COD ratio was followed and compared to the mineralization yield. The targeted mineralization yield was reached after 24 hours of treatment (not shown). Besides, the BODu/COD ratio changed from 0.04 without pre-treatment to 0.37 after 10 hours of pre-treatment (Fig. 15B). These outcomes are in accordance with the results previously presented on the 3DEEM dynamics during the AO pre-treatment. The strong increase of the BODu/COD ratio during the first 10 hours might be correlated with the quasi-total disappearance of fluorescent compounds after 12 hours of pre-treatment. As discussed previously, the decrease of the fluorescence might be considered as a good indicator of the degradation of initial molecules into degradation by-products with potentially higher biodegradability. After 10 hours of pre-treatment, the BODu/COD ratio slightly increased again and reached a constant value close to 0.48 after 20 hours. These data confirmed the very low biodegradability of initial compounds. Most importantly, these results highlighted that an AO pre-treatment can strongly improve the biodegradability of the organic load.

2.4.4 Conclusions

Respirometric data in batch conditions (BOD/COD) showed that AO pre-treatment with grid electrodes increase the biodegradable fraction of residual organic compounds.

3DEEM analyses appears as a relevant methodology for monitoring the coupling between EAOPs and biological treatment, particularly as an indicator of the degradation of initial compounds into non-fluorophores by-products with potentially higher biodegradability.

Further, decreasing the concentration of perchlorate is an important advantage in view of the combination with a biological treatment, perchlorate having an inihibiting effect on heterotrophic micro-organisms (not shown).

**BIBLIOGRAPHY**

Cañizares, P., García-Gómez, J., Fernández de Marcos, I., Rodrigo, M.A., Lobato, J., 2006. Measurement of Mass-Transfer Coefficients by an Electrochemical Technique. J. Chem. Educ. 83, 1204.

Jacquin, C., Lesage, G., Traber, J., Pronk, W., Heran, M., 2017. Three-dimensional excitation and emission matrix fluorescence (3DEEM) for quick and pseudo-quantitative determination of protein- and humic-like substances in full-scale membrane bioreactor (MBR). Water Res. 118, 82-92.

Maghsoodi, M., Jacquin, C., Teychené, B., Heran, M., Tarabara, V.V., Lesage, G., Snow, S.D., 2019. Emerging investigator series: photocatalysis for MBR effluent post-treatment: assessing the effects of effluent organic matter characteristics. Environ. Sci. Water Res. Technol. 5, 482-494.

Monteil, H., Pechaud, Y., Oturan, N., Trellu, C., Oturan, M.A., 2021. Pilot scale continuous reactor for water treatment by electrochemical advanced oxidation processes: Development of a new hydrodynamic/reactive combined model. Chem. Eng. J. 404, 127048.

Mousset, E., Frunzo, L., Esposito, G., Hullebusch, E.D.V., Oturan, N., Oturan, M.A., 2016. A complete phenol oxidation pathway obtained during electro-Fenton treatment and validated by a kinetic model study. Appl. Catal. B Environ. 180, 189-198.

Narayanan, C.M., Narayan, V. Biological wastewater treatment and bioreactor design: a review. Sustain Environ Res 29, 33 (2019).

Trellu, C., Chaplin, B.P., Coetsier, C., Esmilaire, R., Cerneaux, S., Causserand, C., Cretin, M., 2018. Electro-oxidation of organic pollutants by reactive electrochemical membranes. Chemosphere 208, 159-175.

Winkelmann, J., 2018. Diffusion in Gases, Liquids and Electrolytes: Nonelectrolyte Liquids and Liquid Mixtures - Part 2: Liquid Mixtures. Springer Berlin Heidelberg, Berlin, Heidelberg.

**Claims**

1. A system (100) for a continuous treatment of a polluted concentrated effluent such as: a landfill leachate, an effluent from the pharmaceutical, cosmetic or textile industry, a soil washing effluent, a concentrate from a membrane process, comprising non-biodegradable initial organic compounds with a chemical oxygen demand (COD) of between 0.2 kg. m$^{-3}$ and 50 kg. m$^{-3}$, advantageously a chemical oxygen demand (COD) of between 0.2 kg. m$^{-3}$ and 20 kg. m$^{-3}$, comprising, arranged fluidically in series:

   - at least one anodic oxidation reactor (101) comprising a set of a plurality of cathodes and of boron doped diamond anodes, said cathodes and anodes being grids with meshes and being successively arranged in alternation in said reactor so as :

      - a continuous flow of polluted effluent pass through the openings of meshes of anodes and cathodes grid,
      - to realize, in operation, a continuous degradation of non-biodegradable molecules contained in the concentrated effluent:

         • partially into inorganic products,
         • partially into biodegradable by-products,
         • partially into non-biodegradable by-products from the non-biodegradable initial organic compounds,

      and

      - at least one biological treatment reactor (102), which is located downstream of the at least one anodic oxidation reactor (101) with respect to the direction of flow of the concentrated effluent, and which is configured to degrade continuously into inorganic products the biodegradable by-products contained in the output of the upstream at least one anodic oxidation reactor flow.

2. The system (100) according to claim 1, wherein at least one of the following features : the number of the electrode grids, the total active surface of the electrode grids, the number of the openings of the meshes, the size of the openings of the meshes, the ratio of the surface of the openings of the meshes of the anode grids to the total geometric surface of the anode grid, the velocity of the flow through the openings of the meshes in the anodic oxidation reactor, is chosen in order to reach a suitable mass transport coefficient ($k_m$) and so that:

   - the mineralization kinetic, which is measured by the evolution of the Total Organic Carbon (TOC) is substantially the same compared to mineralization kinetic observed in a control anodic oxidation reactor, identical to the anodic oxidation reactor (101), except that anodes and cathodes are plates of the same geometric total surface area than the total solid surface of meshes of the grid, said plates being made of the same materials than the electrode grids, and wherein a same flow rate of the effluent is applied in the plate anodic oxidation reactor,
   - the degradation kinetics of non-biodegradable initial molecules, which is measured by the evolution of a value correlated to the concentration of non-biodegradable initial organic compounds, is faster compared to the plate anodic oxidation reactor, allowing to create an accumulation of a greater concentration of biodegradable by-products, and
   - a reduction, compared to the plate anodic oxidation reactor, in the formation of undesirable by-products of chloride ion oxidation, such as chlorate or perchlorate, is measured.

3. The system (100) according to claim 2, wherein the at least one feature is configured to achieve a first order degradation of the non-biodegradable initial molecules rate constant 1.5 fold higher than the first order degradation rate constant using the control anodic oxidation reactor.

4. The system (100) according to any one of claims 1-3, wherein a ratio between the maximal value of the biological oxygen demand at maximal time (ultimate BOD) and the chemical oxygen demand (COD) of the effluent at the output of the upstream anodic oxidation reactor (101) is of at least 0.25, advantageously of at least 0.4.

5. The system (100) according to any one of claims 2-4, wherein the mass transport coefficient ($k_m$), determined for phenol as control compound and using an inert electrolyte (NaNOs), is at least of 5 $\mu$m.s$^{-1}$.

6. The system (100) according to claims 1-5, wherein the flow rate and the design of said boron-doped diamond anode are chosen so as to optimize the mass transport coefficient ($k_m$) of phenol to the anode surface, which is quantified numerically from experimental data with low initial concentration of phenol, such as the removal of COD is limited by mass transport phenomena, as model pollutant by determining the value of km from calibration of the following model with experimental data of COD (chemical oxygen demand) removal in the considered reactor, according to the equation :

$$\frac{\partial C}{\partial t} = D\,\frac{\partial^2 C}{\partial x^2} - \bar{u}\,\frac{\partial C}{\partial x} - k_m\, a\, C$$

where $C$ is the COD concentration (gO$_2$ m$^{-3}$), $D$ is the dispersion coefficient (m$^2$ s$^{-1}$), $\bar{u}$ is the mean flow velocity (m.s$^{-1}$), $k_m$ is the mass transport coefficient (m.s$^{-1}$), $\alpha$ is the total active surface of electrodes (A) by reactor volume (V) (a = A/V) (m$^2$.m$^{-3}$), $F$ is the Faraday constant (96485 C.mol$^{-1}$) and $I$ is the current intensity (A).

7. The system (100) according to any one of claims 1-6, wherein in the anodes of the at least one anodic oxidation reactor (101), which are grids, meshes are openings with a length of between 3 mm and 12 mm and a nominal short length of between 2 mm and 8 mm.

8. The system (100) according to anyone of claims 1-7, wherein the anodes have a ratio of the openings surface compared to the total geometric surface of the anode between 5% and 60%, preferably between 10% and 40%.

9. The system (100) according to anyone of claims 1-8, further comprising a means (105) adapted to measure chemical oxygen demand (COD) and/or the (BOD) and/or the total organic carbon (TOC).

10. The system (100) according to anyone of claims 1-9, further comprising a mean adapted to measure fluorescence levels of the effluent at the output of the at least one anodic oxidation reactor (101).

11. The system (100) according to any one of claim 9 or 10, wherein the means (105) adapted to measure the COD, the BOD and/or the TOC and/or fluorescence comprises a spectro fluorophotometer.

12. The system (100) according to any one of claims 1-11, further comprising at least one recirculation circuit (104) to allow the effluent at the output of any of the at least one anodic oxidation reactor (101) to recirculate said effluent through at least one anodic oxidation reactor(101) to degrade the remaining non-biodegradable initial organic compounds and the non-biodegradable by-products into: another different non-biodegradable by-products, inorganic products, and biodegradable by-products at each recirculation, until a desired level of non-biodegradable initial organic compound which remains after N steps of recirculation is inferior to a predetermined threshold value, N being a natural number.

13. The system (100) according to claim 12, wherein the threshold value is defined so that in the effluent the concentration of remaining non-biodegradable initial organic compounds after the N steps of recirculation is inferior to 20% of the initial concentration of the non-biodegradable initial organic compounds, advantageously inferior to 10% of the initial concentration of the non-biodegradable initial organic compounds.

14. The system (100) according to any one of claims 1-13, wherein the one biological treatment reactor (102) is configured to convert:

   - continuously inorganic nitrogen compounds in by-products such as $N_2$,
   - chlorinated inorganic compounds in by-products such as chloride ions.

15. The system (100) according to any one of claims 1-14, wherein the at least one biological treatment reactor (102) is configured to realize : aerobic processes based on fixed and / or free biomass, anaerobic processes based on fixed and / or free biomass, each of these biological treatment being possibly coupled with a biomass separation step based on a settling process or a membrane process.

16. A process for treating (200) in a continuous flow at least one polluted concentrated effluent of a chemical oxygen demand of between 0.2 kg. $m^{-3}$ and 50.0 kg. $m^{-3}$, advantageously a chemical oxygen demand (COD) of between 0.2 kg. $m^{-3}$ and 20 kg. $m^{-3}$, comprising the implementation of a system according to any one of the preceding claims, said process comprising :

   - at least one step of treating the effluent by anodic oxidation (201) said at least one effluent, and
   - at least one step of treating the product of the anodic oxidation treatment, by a biological treatment (203).

17. The process (200) according to claim 16, wherein the velocity of the polluted effluent through the openings of the meshes of grid electrodes in the at least one anodic oxidation reactor is comprised between 2 and 150 m.$h^{-1}$, advantageously between 15 and 100 m.$h^{-1}$.

18. The process (200) according to any one of claim 16 or 17, comprising a step of measuring (202) the chemical oxygen demand (COD) and/or the ratio between ultimate BOD and COD and/or the total organic carbon (TOC) and/or fluorescence levels of the effluent after the at least one step of treating the effluent by anodic oxidation, in order to evaluate the biodegradability of the effluent at the output of the anodic oxidation reactor, wherein when COD and/or BOD and/or TOC and/or fluorescence level of the effluent does not reach a reference value, then step (201) is repeated until said reference value is reached.

100

103   101           105                    102

input

output

104

104

104

▶ Flow of effluent

⋈ Valve

**Figure 1**

# Front view

# Upper view

# Electrode

# Figure 2

# Front view

# Upper view

# Electrode

# Figure 3

**Figure 4**

200

201

treating the effluent by anodic oxidation

202

Measuring COD, TOC, or fluorescence
levels

203

treating by a biological treatment

**Figure 5**

**A**

**B**

# Figure 6

Figure 7

**Figure 8**

Figure 9

**Figure 10**

**Figure 11**

**Figure 12**

**Figure 13**

**A**

**B**

# Figure 14

**A**

**B**

# Figure 15

## EUROPEAN SEARCH REPORT

**Application Number**

EP 23 30 7273

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 204 144 A (INST OCEANOGRAPHIC INSTR SHANDONG ACADEMY OF SCIENCES) 6 September 2019 (2019-09-06) * figure * * paragraphs [0012] – [0023] * | 1-18 | INV. C02F1/467 ADD. C02F3/02 C02F3/28 |
| X | ARENAS CRISTIAN B ET AL: "Assessment of electrooxidation as pre- and post-treatments for improving anaerobic digestion and stabilisation of waste activated sludge", JOURNAL OF ENVIRONMENTAL MANAGEMENT, ELSEVIER, AMSTERDAM, NL, vol. 288, 22 March 2021 (2021-03-22), XP086546954, ISSN: 0301-4797, DOI: 10.1016/J.JENVMAN.2021.112365 [retrieved on 2021-03-22] * 2. Materials and methods * | 1-18 | C02F1/461 C02F101/12 C02F101/16 C02F101/30 C02F103/00 C02F103/06 C02F103/30 C02F103/34 |
| A | CN 115 676 980 A (UNIV TIANJIN TECHNOLOGY) 3 February 2023 (2023-02-03) * paragraph [0003]; figure 1 * | 1-18 | **TECHNICAL FIELDS SEARCHED (IPC)** C02F |
| A | CN 219 567 657 U (GUIZHOU SHENGDAYA TECH CO LTD) 22 August 2023 (2023-08-22) * figures 1,2 * * claims 1,2 ,5 * | 1-18 | |
| A | US 8 080 150 B2 (NYMAN LARS [SE]; HERLITZ FREDRIK [SE] ET AL.) 20 December 2011 (2011-12-20) * figure 1 * * claims 1, 13, 27, 28 * | 1-18 | |

The present search report has been drawn up for all claims

| Place of search | Date of completion of the search | Examiner |
|---|---|---|
| The Hague | 30 April 2024 | Onel Inda, Santiago |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 30 7273**

This annex lists the patent family members relating to the patent documents cited in the above-mentioned European search report.
The members are as contained in the European Patent Office EDP file on
The European Patent Office is in no way liable for these particulars which are merely given for the purpose of information.

**30-04-2024**

| Patent document cited in search report | | Publication date | Patent family member(s) | Publication date |
|---|---|---|---|---|
| CN 110204144 | A | 06-09-2019 | NONE | |
| CN 115676980 | A | 03-02-2023 | NONE | |
| CN 219567657 | U | 22-08-2023 | NONE | |
| US 8080150 | B2 | 20-12-2011 | NONE | |

EPO FORM P0459

For more details about this annex : see Official Journal of the European Patent Office, No. 12/82

**EP 4 574 773 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CAÑIZARES, P.** ; **GARCÍA-GÓMEZ, J.** ; **FERNÁNDEZ DE MARCOS, I.** ; **RODRIGO, M.A.** ; **LOBATO, J.** Measurement of Mass-Transfer Coefficients by an Electrochemical Technique. *J. Chem. Educ.*, 2006, vol. 83, 1204
- **JACQUIN, C.** ; **LESAGE, G.** ; **TRABER, J.** ; **PRONK, W.** ; **HERAN, M.** Three-dimensional excitation and emission matrix fluorescence (3DEEM) for quick and pseudo-quantitative determination of protein- and humic-like substances in full-scale membrane bioreactor (MBR). *Water Res.*, 2017, vol. 118, 82-92
- **MAGHSOODI, M.** ; **JACQUIN, C.** ; **TEYCHENÉ, B.** ; **HERAN, M.** ; **TARABARA, V.V.** ; **LESAGE, G.** ; **SNOW, S.D.** Emerging investigator series: photocatalysis for MBR effluent post-treatment: assessing the effects of effluent organic matter characteristics. *Environ. Sci. Water Res. Technol.*, 2019, vol. 5, 482-494
- **MONTEIL, H.** ; **PECHAUD, Y.** ; **OTURAN, N.** ; **TRELLU, C.** ; **OTURAN, M.A.** Pilot scale continuous reactor for water treatment by electrochemical advanced oxidation processes: Development of a new hydrodynamic/reactive combined model. *Chem. Eng. J.*, 2021, vol. 404, 127048
- **MOUSSET, E.** ; **FRUNZO, L.** ; **ESPOSITO, G.** ; **HULLEBUSCH, E.D.V.** ; **OTURAN, N.** ; **OTURAN, M.A.** A complete phenol oxidation pathway obtained during electro-Fenton treatment and validated by a kinetic model study. *Appl. Catal. B Environ.*, 2016, vol. 180, 189-198
- **NARAYANAN, C.M.** ; **NARAYAN, V.** Biological wastewater treatment and bioreactor design: a review. *Sustain Environ Res*, 2019, vol. 29, 33
- **TRELLU, C** ; **CHAPLIN, B.P.** ; **COETSIER, C.** ; **ESMILAIRE, R.** ; **CERNEAUX, S.** ; **CAUSSERAND, C.** ; **CRETIN, M.** Electro-oxidation of organic pollutants by reactive electrochemical membranes. *Chemosphere*, 2018, vol. 208, 159-175
- **WINKELMANN, J.** Diffusion in Gases, Liquids and Electrolytes: Nonelectrolyte Liquids and Liquid Mixtures - Part 2: Liquid Mixtures. Springer Berlin Heidelberg, 2018